# EUROPEAN PATENT APPLICATION

(11) **EP 4 664 951 A1**
(43) Date of publication of application: **17.12.2025**
(21) Application number: 24729168.5
(22) Date of filing: 07.02.2024
(51) Int. Cl.: H04W 8/18, H04W 48/02, H04W 76/34

(54) **FEDERATED LEARNING**

(30) Priority: 10.02.2023 US 202363444570 P; 06.04.2023 US 202363457782 P
(71) Applicant: LG Electronics Inc., Seoul 07336 (KR)
(72) Inventor: KIM, Seokjung, Seoul 06772 (KR); YOUN, Myungjune, Seoul 06772 (KR); KIM, Laeyoung, Seoul 06772 (KR); BYUN, Daewook, Seoul 06772 (KR)
(74) Representative: Maikowski & Ninnemann Patentanwälte Partnerschaft mbB
(86) International application number: PCT/KR2024/001843
(87) International publication number: WO 2024/167316

(57) **Abstract**

The present disclosure provides a method for an AMF to perform a communication. The method may include receiving a registration request message including core network capability information from a UE; evaluating a validity condition of an entry included in a list of allowed CAGs; and determining that it is necessary to update the list of allowed CAGs for the NG-RAN.

## Description

### TECHNICAL FIELD

The present specification relates to a radio communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 130 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

The AMF may need to update the Allowed Closed Access Group (CAG) list for a terminal. In the past, the update process has resulted in interruptions to services provided to terminals and ineffective updates.

### DISCLOSURE

### TECHNICAL SOLUTION

In one aspect, a method is provided for an AMF to perform a communication. The method may include: receiving a registration request message including core network capability information from a UE; evaluating a validity condition of an entry included in the list of allowed CAGs; and determining that it is necessary to update the list of allowed CAGs for the NG-RAN.

In another aspect, an apparatus implementing the above method is provided.

In one aspect, a method of performing a communication by a UE is provided. The method may include: transmitting a registration request message comprising core network capability information to an AMF; and receiving a registration message including a list of allowed CAGs from said AMF.

In another aspect, an apparatus implementing the above method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a registration procedure to which implementations of the present disclosure is applied.
FIGS. 7a and 7b illustrate a first example of a procedure for checking a validity condition, according to one embodiment of the present disclosure.
FIGS. 8a and 8b illustrate a second example of a procedure for checking a validity condition, according to one embodiment of the present disclosure.
FIG. 9 illustrates an example of a UE configuration update procedure according to one embodiment of the disclosure.
FIG. 10 illustrates an example of a procedure performed according to one embodiment of the present disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDDCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

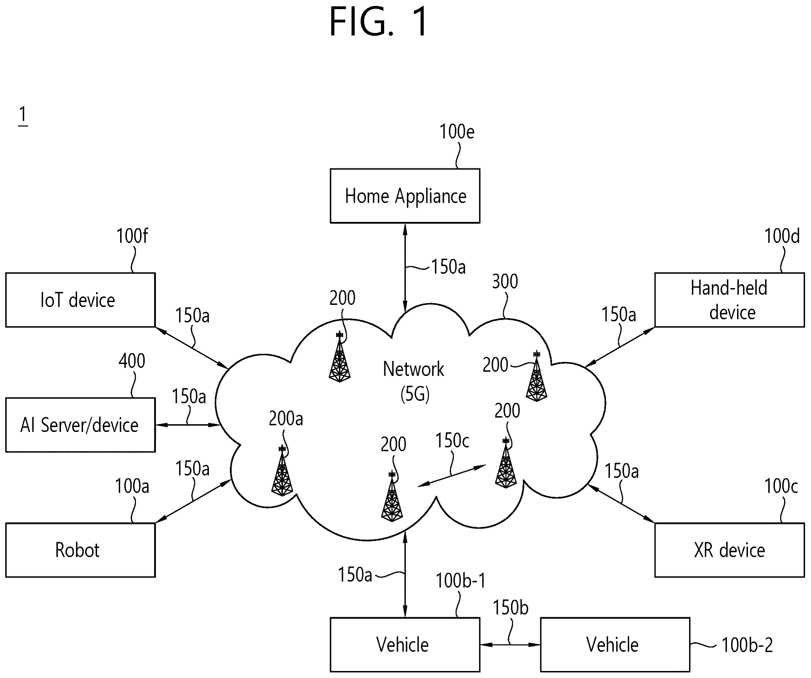

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without transmiting through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

| | | |
|---|---|---|
| [42] As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving). | | |

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names.

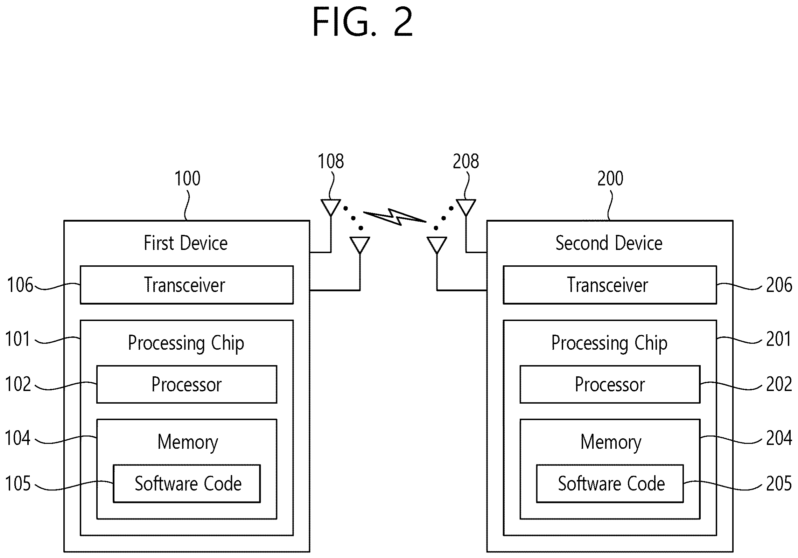

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE operation according to an implementation of the present disclosure or control the transceiver(s) 106 to perform the UE operation according to an implementation of the present disclosure. The processor(s) 202 connected to, mounted on or launched in the second wireless device 200 may be adapted to perform the BS operation according to an implementation of the present disclosure or control the transceiver(s) 206 to perform the BS operation according to an implementation of the present disclosure.

In the present disclosure, a BS is also referred to as a node B (NB), an eNode B (eNB), or a gNB.

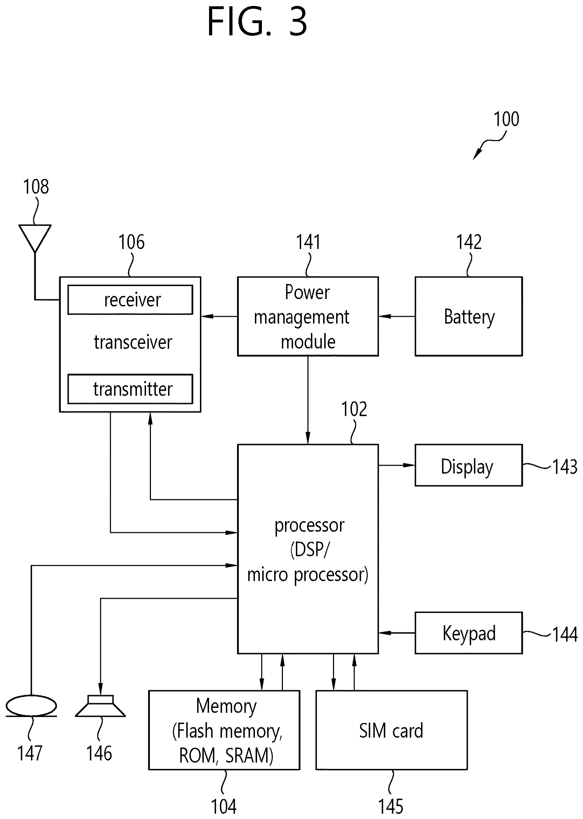

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

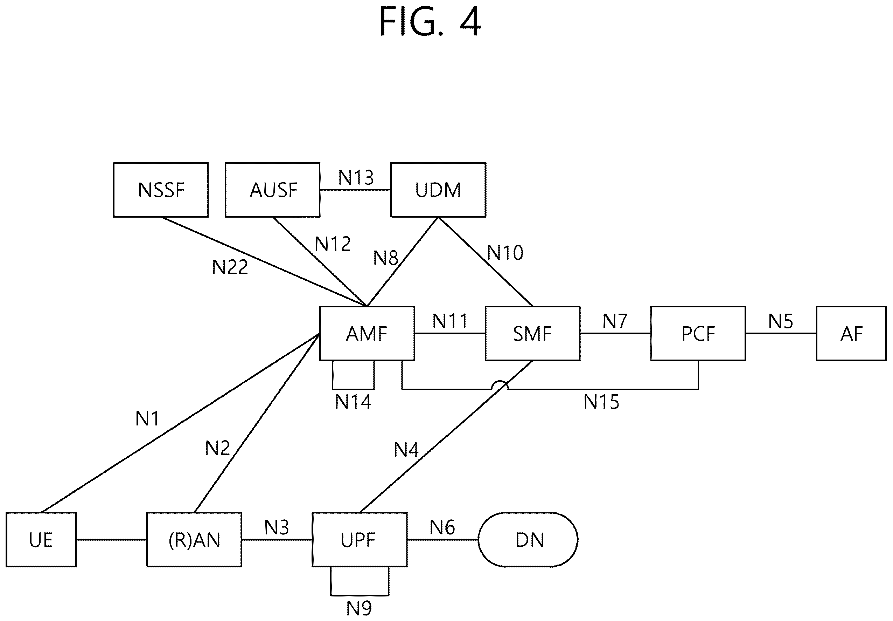

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described. Section 4.2.2.2 of 3GPP TS 23.502 V16.3.0 (2019-12) can be referred.

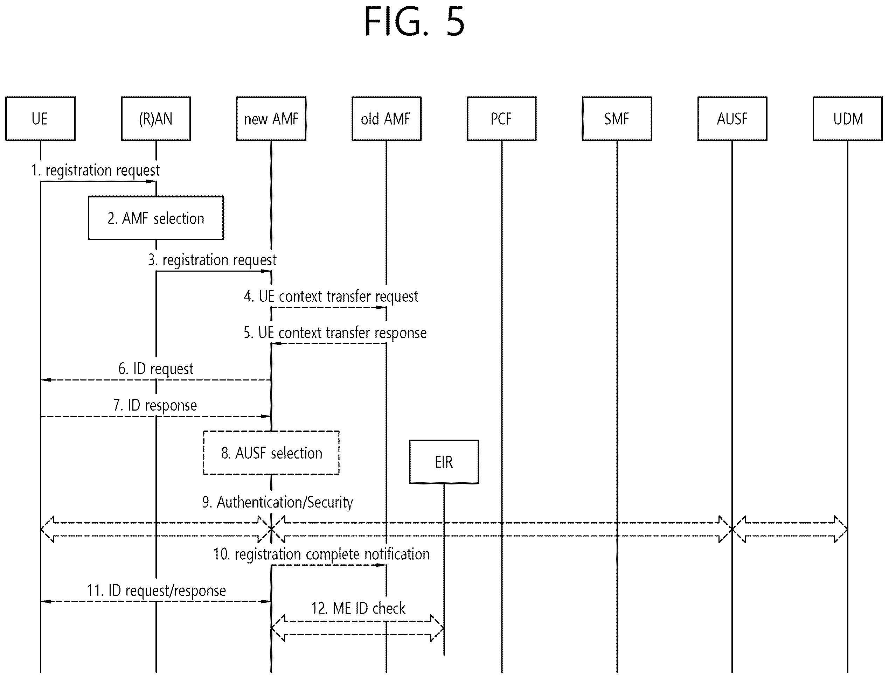

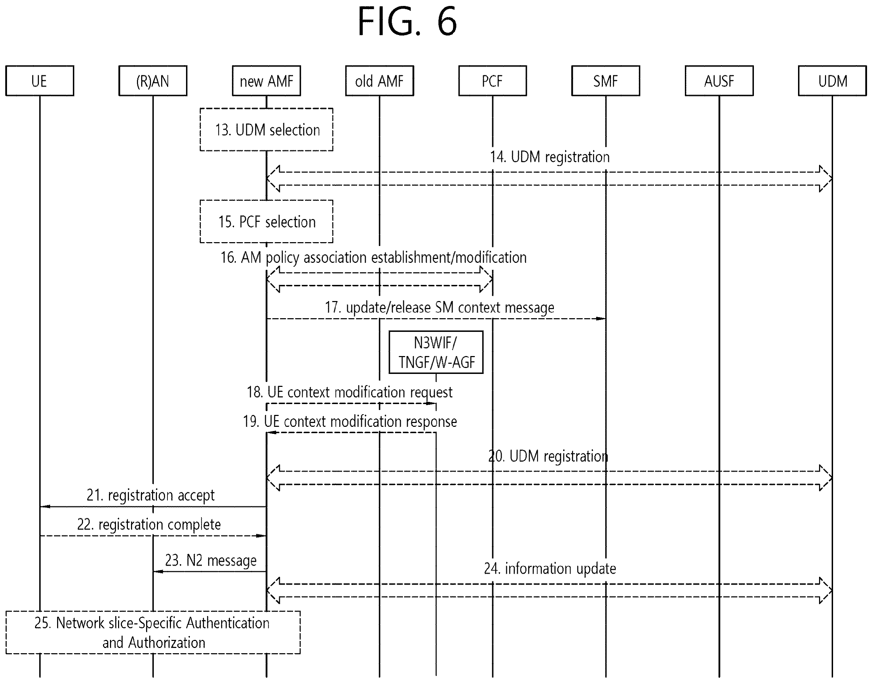

FIGS. 5 and 6 show an example of a registration procedure to which implementations of the present disclosure is applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 5 and 6 applies on all these registration procedures, but the periodic registration update need not include all parameters that are used in other registration cases.

The general registration procedure in FIGS. 5 and 6 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 5 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication _RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 6, which follow the procedures of FIG. 5, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each Single Network Slice Selection Assistance Information (S-NSSAI) of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.

(24) Step 24: The new AMF may perform information update towards the UDM.

(25) Step 25: The UE may execute Network Slice-Specific Authentication and Authorization procedure.

According to the prior art, there are issues such as the following examples

For example, there is a need to enable UEs to discover, select, and access Non Public Networks (NPNs) as hosting networks and receive localized services.

If the UE accesses the hosting network using the subscription/credentials of the home network, only two cases can be considered
- If the home network is a PLMN, the hosting network can be a PNI-NPN or SNPN.
- If home network is an SNPN, hosting network can only be a Stand-alone Non-Public Network (SNPN).

If the UE accesses the Hosting network using the other credentials rather than the subscription/credentials from the UE Home network, the determination of the subscription used to access the Hosting network is by implementation specific prior to automatic network selection.

### Examples of the content of information for accessing localized services include

For manual selection existing SIB information e.g., HRNN and/or application layer information can be used without any normative impact.

For automatic selection the following is considered:
a. In the case of SNPN as hosting network, for automatic SNPN selection, the existing Credentials Holder controlled prioritized list of preferred SNPNs (and GINs) is extended with, for each entry in the list, time and location validity information. An entry may include time validity only, location validity only, or both. The location validity information can be in the form of geolocation and/or TAIs of serving PLMN/SNPN.
   NOTE: The location validity information is used to aid the UE where to search for the SNPNs in the CH lists and is not used for any enforcement.
b. for automated cell re-selection:
   - In the case of PNI-NPN with CAG, the allowed CAG list can include time validity information.

In the case of PNI-NPN using S-NSSAI, the SOR can include S-NSSAI information, or S-NSSAI validity information including time and location can be used

Where and how the UE obtains information to access localized services is described below.

Information for localized services may be obtained by the UE in the application layer from the home network or localized service provider through means outside of 3GPP scope.

Information for selecting a hosting network is provided below:
1. The information for hosting network, selection and access can be preconfigured in the UE or dynamically provisioned by home network (via the VPLMN when roaming) using existing mechanisms.
2. In the case of SNPN as hosting network, the dynamic provisioning of prioritized list of hosting network information can be done via SoR:
   i. The home network UDM may determine to update UE with prioritized list of hosting network information using SoR procedure. Following triggers may apply:
      - UE location as part of Registration procedure.
      - UE subscription data change, e.g. via external parameter provisioning.
3. In the case of PNI-NPN as hosting network, the dynamic provisioning of allowed CAG ID list reuses existing procedure

This section describes how to use localized service information in UE.

The following examples may be applicable. For the purposes of the present disclosure, the terms credential and credential may be used interchangeably.
1. If UE uses home network credential to access a hosting network:
   a. When the end user intends to access localized service and the validity conditions of localized service are met, the UE initiates hosting network selection using the hosting network selection information.
      i. For SNPN as hosting network, the UE can switch between PLMN selection and hosting network selection for SNPN selection with the following difference:
         - If the UE is configured with Credential Holder controlled prioritized lists of preferred SNPNs and GINs and the lists include entries with a validity condition and the validity condition is met for at least one of those entries, then the UE may select the related SNPNs even if the subscribed SNPN (if any) is available (i.e. the hosting network may have a higher priority than the subscribed SNPN). How the UE switches among the network selections is up to UE implementation.
      ii. For PNI-NPN as hosting network associated with CAG ID, the UE only considers an entry in the Allowed CAG list valid if and while all conditions (if there is any) for that entry are met.
   b. Automatic hosting network selection is controlled by the home network, via SoR procedure with SoR information including certain authorized criteria e.g. time. Based on the SoR information, the UE performs automatic hosting network selection:
      i. For manual hosting network selection, the UE presents available localized service information it has received to the end user.
2. If the UE needs to obtain a new set of credentials/subscription to access the hosting network:
   A. It is up to UE implementation to decide how to switch to the new subscription profile for accessing hosting network.
3. The UE determines SNPN access mode is activated/de-activated using implementation specific means, or using received localized service/hosting network assistance information as input.

Describes the credentials used to access the hosting network and how to obtain them.

The following principles based on the assessment can be applied to SNPN as a hosting network, as illustrated by the following examples
1. The UE checks whether it is possible to re-use the home network credentials to access the hosting network by performing the following:
   a. If the UE uses CH/User controlled priority lists part of the Home network subscription profile or if the UE uses hosting network related information from the Home network (part of the localized service information) which indicates support of CH credentials, the UE determines that home network credential can be used to register with the selected Hosting network.
2. If the UE has Default credentials and the UE determines that new credentials for accessing hosting network are needed, the UE uses the Default credentials for the onboarding mechanism with the ON-SNPN acting as hosting network with the following enhancements:
   a. In case that the UE is preconfigured with PVS address information and the UE receives PVS address information from the SMF during the PDU Session Establishment Accept message, the UE may determine based on local configuration whether to apply or ignore the PVS address information provided by the SMF.
      Based on the evaluation, the following principles can be recommended for standardization work in the case of PNI-NPN as a hosting network
3. Only UEs equipped with a USIM configured with PLMN credentials can access a hosting network which is a PNI-NPN. When the UE requests to access the hosting network, the home PLMN credential(s) are used during authentication procedure.

How to access localized services on a hosted network is described.

Based on the evaluation, the following principles can be discussed
1. Validity conditions provided to the UE as part of the localized service information may be used to restrict the UE's access to the hosting network.
2. Existing methods, such as network slicing, forbidden area restriction, service area restriction, CAG, LADN, URSP rules can also be utilized to restrict UE's access, i.e. no need for additional normative work for access control in hosting network.
3. In order to restrict access to a hosting network to a specific area, a hosting network operator may deploy and broadcast multiple hosting network IDs, i.e. SNPN IDs for SNPN case and CAG IDs in the case of PNI-NPN, in different areas depending on localized service area validity. Each localized service is mapped to a specific hosting network ID. Multiple localized service areas can be mapped to the same hosting network ID if their allowed service areas are the same. Validity conditions are also used by hosting network to restrict access.

It may be discussed how to provide localized services through NPNs at specific times and/or locations.

Issues like the following examples exist.

There is a need to support UEs to discover, select, and access NPNs as hosting networks and receive localized services.

To provide localized services to a UE, the UE must be able to discover, select and access a hosting network for localized services. The discovery mechanism may be based on provisioning the UE with appropriate information. For example, clauses 6.41.2.3, 6.41.2.4 and 6.41.2.5 of TS 22.261 V18.8.0 define various requirements for discovery, selection and access to the hosting network.

For the following solutions, the following assumptions can be considered:
- The UE can, but not necessarily, have prior subscription with the hosting network and/or the localized services provider.
- The information for discovery of hosting network offering the localized services can be provided to the UE via either hosting network or UE's home network, or UE's serving network or localized services provider. This information allows the UE to discover, select and access the hosting network offering the localized services.
- Reception and usage of configuration provided by a localized services provider to discover and access a hosting network and localized services is subject to home network operator's policy and agreement between a localized services provider and hosting network operator, including the considerations of prior service agreement with a localized services provider and no prior subscription to hosting network.
- If the UE is able to obtain services from two networks simultaneously, it may additionally select the hosting network.
- The selection of a hosting network can be done on request by the user, i.e. using manual selection, unless the UE can, maintain the PDU Sessions established with the home network and retain the services provided by the home network on these PDU Sessions, while selecting the hosting network.
- Automatic selection of a hosting network needs to be allowed by the home network of the subscription/credentials used by the UE.
- A localized service agreement is established.

This key issue aims at addressing the following aspects:
- Investigate which type of information needs to be exchanged between hosting network and a localized services provider so that a UE can perform discovery, selection and connection of the hosting network and access the localized services provided via the hosting network.
   NOTE: The hosting network can also act as a service provider for localized services.
- What is the provisioning mechanism and the information needed for the UE to discover, select and access suitable hosting network for localized services with possible validity conditions for accessing the hosting network offering the localized services, because of the nature of the localized service and hosting network (e.g., time and location constrains). This includes information enabling the UE to be aware of services that can be accessed via hosting NPN.
- The discovery and selection process of hosting networks and localized services offered through the hosting network for UEs to receive localized services. Both automatic and end-user manual selection apply.
- How a UE already registered in a network (PLMN or NPN) can discover a suitable hosting network and the localized services provided via the hosting network when the hosting network and/or localized services become available.
- How to ensure the localized services are accessed by UE according to the conditions when and where the localized services are allowed to be accessed by the UE.
- How the UE is provisioned with credentials (if required) to access the selected localised services provided via the hosting network.
- Mechanisms to authorize UE to access the hosting network.

One of the above agendas is related to the study of how to convey information about the time or place where the hosting network providing the localized service is valid, i.e., the validity condition, to the terminal.

In addition, it may be discussed how to provide services via VMR (i.e., MBSR) at specific times and/or locations. This is discussed in TR 23.700-05.

Control of UE access to 5GS via mobile base station relay is required.

Based on the requirements of TS 22.261 V18.8.0, it shall be capable of supporting provisioning and configuration mechanisms to control the selection and access of UEs to mobile base station repeaters (i.e. IAB nodes) based on geographical or temporal restrictions, etc.

These requirements need to be addressed. The potential solution should allow for fine-grained and efficient control of IDLE or CONNECTED mode UE access to the MBSR, for example, while the UE is connected or moving. In particular, the following aspects should be addressed:
- Whether and how to manage access control for the UE's access to IAB-node;
- Whether and how to manage the UE's access (e.g. permitted/restricted) to IAB-node for specific geographical location(s), time window(s), or other conditions/criteria;
- whether and how to improve the control of new UEs.

If the validity conditions for time and/or location for a particular CAG are met, it can be included in the Allowed CAG list for the terminal. If the conditions are not met, the CAG is no longer valid and cannot be included in the Allowed CAG list.

Some CAG ID(s) may be removed from the Allowed CAG list for a terminal. In such a case, according to the prior art, the AMF should transmit the newly updated Allowed CAG list to the terminal via the UE Configuration Update procedure and then perform a NAS release. The same operation may apply for a hosting network providing a localized service. In this case, some CAGs may no longer be valid based on on the Validity condition. The AMF should then update the Allowed CAG list for that terminal and release the connection to the terminal. Although the terminal may still be able to receive service from the cell, it may be inconvenient to re-establish a new connection to the device and resume service. For example, a device may receive localized service and use other home network services (e.g., voice call) at the same time. In this case, releasing the connection to the terminal may cause the terminal's service to be interrupted.

For example, a CAG might be in effect for a service that is offered at a specific location and time (e.g., a localized service such as a concert). In such cases, the CAG may become invalid when the concert ends. According to the prior art, the network connection is terminated for a UE for which the CAG associated with the concert is not valid. In such cases, the UE's network connection is terminated, even though the UE may be able to perform its normal non-concert services well. The problem is that the UE needs to be reconnected in situations where the UE may be well served by existing services.

In addition, there may be terminals that do not have the capability to check the validity condition for a CAG. These terminals may be served by a network where the validity of a particular CAG is changed by a validity condition. In this case, the network should update the terminal's allowed CAG list appropriately based on the validity condition change, and prior art does not support this operation.

There is a need for a way to support CAGs with validity conditions in NG-RAN. Note that the terms validity condition and validity condition may be used interchangeably in the disclosure of the present disclosure.

According to the present disclosure, the NG-RAN may transmit to the AMF a capability to determine the validity condition for a particular CAG. Based on the capability, it is proposed that the AMF may configure and provide to the NG-RAN an Allowed CAG list including the validity condition, and based on the Allowed CAG list including the validity condition, the NG-RAN may continuously check the validity condition for the terminal. If a specific CAG is no longer valid in the Allowed CAG list for a terminal, a method is described for the NG-RAN to handover the terminal.

For example, a terminal may not have the capability to check the validity condition for a CAG. For these terminals, the AMF can still set the Allowed CAG list appropriately by checking the validity condition for each CAG. The AMF may transmit the allowed CAG list to the terminal. It is also possible that some CAGs in the Allowed CAG list for a terminal are no longer valid due to validity conditions. In this case, the AMF can maintain the current NG connection without triggering an AN release. The AMF can then forward the updated Allowed CAG list to the NG-RAN.

In the present disclosure, the following examples are proposed. For example, the AMF may be informed whether the NG-RAN has the capability to check the validity condition for a particular CAG. Based on the capability, the AMF may decide whether to provide the validity condition information for a specific CAG in the Allowed CAG list to the NG-RAN along with the Allowed CAG list. In addition, the NG-RAN may be provided with validity condition information for a specific CAG. In this case, the NG-RAN may continue to check the condition. If a particular CAG is no longer valid, the NG-RAN may determine whether the terminal can continue to be served by the cell that the terminal accessed. If the cell can no longer serve the terminal, the NG-RAN may handover the terminal to another cell.

For some of the service operations between Core NFs described below, new service operations may be defined and used. Also, for some or all of the NG messages between AMF and NG-RAN described below, new NG messages may be defined and used. Also, for some or all of the RRC messages between the NG-RAN and the terminal described below, new RRC messages may be defined and used.

In the procedures below, some steps can be performed simultaneously/parallel or in an alternate order.

The names of indication or parameter information suggested below are examples and may be substituted and interpreted for other names for the proposed procedure/purpose/method.

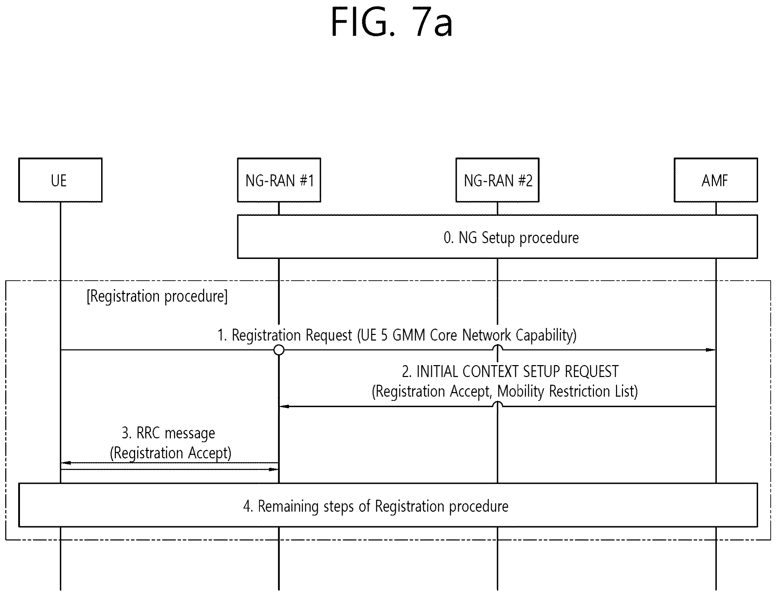

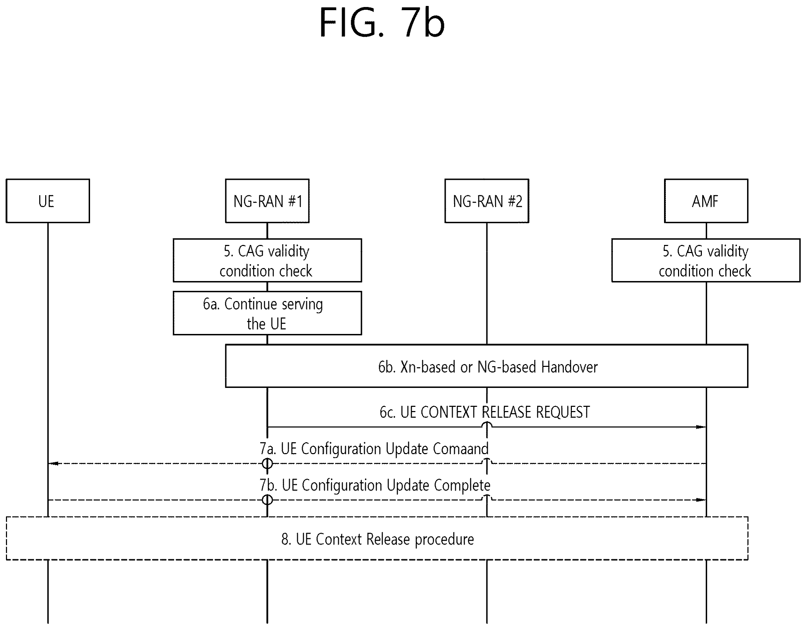

In the following, an example of the NG-RAN and the AMF checking the validity conditions for CAG will be described, referring to the examples of FIG. 7a and FIG. 7b.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

**FIGS. 7a** **and** **7b** **illustrate a first example of a procedure for checking a validity condition, according to one embodiment of the present disclosure.**

FIGS. 7a and 7b illustrate example situations where the NG-RAN and AMF may determine that a particular CAG within the Allowed CAG list for a terminal is no longer valid based on a validity condition. In such a situation, the NG-RAN and/or AMF may continue to provide services (e.g., localized services, etc.) to the terminal.

The NG-RAN can continuously check the validity condition for each CAG to determine whether the CAG value is valid within the Allowed CAG List.

Step 0: To generate an NG interface between each the NG-RAN and the AMF, the NG-RAN may send an NGAP NG SETUP REQUEST message to the AMF. This starts the NG setup procedure. If the individual NG-RAN has the capability to check the validity condition for the CAG, the NG-RAN informs the AMF of this fact in a NGAP NG SETUP REQUEST message. The AMF responds to the NG-RAN by sending a NGAP NG SETUP RESPONSE message. If the AMF supports a feature for a CAG with a validity condition, the AMF may also notify the NG-RAN of its support in a NGAP NG SETUP RESPONSE message.

The NG-RANs can also use the Xn interface to exchange information about whether each node has the capability to check the validity condition for the CAG.

Step 1: The terminal may send a Registration Request message to the AMF over NG-RAN #1. The terminal may attempt to register with the network. At this time, the terminal may have the capability to check the validity condition for the CAG. The terminal may inform the AMF of the capability of the terminal via the UE 5GMM Core Network Capability IE in the Registration Request message.

Step 2: If the AMF decides to accept the registration request for the terminal, it requests NG-RAN #1 to create a UE context using the INITIAL CONTEXT SETUP REQUEST message. The AMF may also generate a Registration Accept message to be delivered to the terminal. The AMF may send an INITIAL CONTEXT SETUP REQUEST message including the Registration Accept message to NG-RAN #1.

At this point, for a terminal that has the capability to check the validity condition for the CAG, the AMF may send a Registration Accept message including the Allowed CAG list information. Here, the Allowed CAG list information is as shown in the following example:
- CAG ID(s) not related to the validity condition

CAG ID(s) including Validity condition, e.g., CAG(s) + time validity condition and/or location validity condition
It is also possible that the terminal does not have the capability to check the validity condition for a CAG, but the subscription data for the terminal includes a CAG with a validity condition. In this case, the AMF may send a Registration Accept message including the Allowed CAG list information. Here, the Allowed CAG list information is shown in the following example:
   CAG ID(s) not related to the validity condition
   If a time validity condition exists and the condition is satisfied, the CAG ID(s) related to the validity condition (→ information about the time validity condition is not transmitted to the terminal)
   If a location validation condition exists, the CAG ID(s) related to that validation condition (→ information about the location validation condition is not transmitted to the terminal)
   The AMF may include the following Allowed CAG list contents in the Mobility Restriction List IE included in the INITIAL CONTENT SETUP REQUEST message. This allows the AMF to forward the INITIAL CONTENT SETUP REQUEST message including the Allowed CAG list to NG-RAN #1. An example of the Allowed CAG list is shown below:
      A) CAG ID(s) not related to the validity condition.
      B) If a time validity condition exists and the condition is satisfied, the CAG ID(s) related to the validity condition (→ information about the time validity condition is not transmitted to the terminal)

For example, the AMF may configure information like the example in B) as an Optional IE, such as the following CAG with validity condition IE. The AMF may also transmit information such as the example in B), configured to Optional IE, to NG-RAN #1.

For reference, the examples in Table 3 through Table 6 below show the Mobility Restriction List Information Element (IE), NPN Mobility Information IE, and Allowed PNI-NPN List IE as defined in TS 38.413.

An example of a Mobility Restriction List is described.

This IE defines roaming or access restrictions for subsequent mobility actions that provide information about the destination of the mobility action for the UE, such as handover, or defines roaming or access restrictions for SCG selection or appropriate RNA assignment during dual association actions. The NG-RAN operation when this IE is received is specified in TS 23.501.

Table 3 is an example of a mobility restriction list.

**[Table 3]**

| IE/Group Name | Presenc e | Range | IE type and reference | Semantics description | Criticalit y | Assig ned Critic ality |
|---|---|---|---|---|---|---|
| Serving PLMN | M | | PLMN Identity9.3.3.5 | | - | |
| Equivalent PLMNs | | 0..<max noofEP LMNs> | | Allowed PLMNs in addition to Serving PLMN.This list corresponds to the list of "equivalent PLMNs" as defined in TS 24.501]. | - | |
| | | | | This list is part of the roaming restriction information. Roaming restrictions apply to PLMNs other than the Serving PLMN and Equivalent PLMNs. | | |
| >PLMN Identity | M | | 9.3.3.5 | | - | |
| RAT Restrictions | | 0..<max noofEP LMNsP1 usOne> | | This IE contains RAT restriction related information as specified in TS 23.501. | - | |
| >PLMN Identity | M | | 9.3.3.5 | | - | |
| >RAT Restriction Information | M | | BIT STRING {e-UTRA (0), nR (1), nR-unlicensed (2), nR-LEO (3), nR-MEO (4), nR-GEO (5), nR-OTHERSAT (6)} (SIZE(8, ...)) | Each position in the bitmap represents a RAT. | - | |
| | | | | If a bit is set to "1", the respective RAT is restricted for the UE. If a bit is set to "0", the respective RAT is not restricted for the UE. | | |
| | | | | Bit 7 reserved for future use. | | |
| >Extended RAT Restriction Information | O | | 9.3.1.126 | If this IE is included, the RAT Restriction Information IE is ignored. | YES | ignor e |
| Forbidden Area Information | | 0..<max noofEP | | This IE contains | - | |
| | | LMNsP1 usOne> | | Forbidden Area information as specified in TS 23.501 [9]. | | |
| >PLMN Identity | M | | 9.3.3.5 | | - | |
| >Forbidden TACs | | 1.. <max noofFor bTACs> | | | - | |
| >>TAC | M | | 9.3.3.10 | The TAC of the forbidden TAI. | - | |
| Service Area Information | | 0..<max noofEP LMNsPl usOne> | | This IE contains Service Area Restriction information as specified in TS 23.501 [9]. | - | |
| >PLMN Identity | M | | 9.3.3.5 | | - | |
| >Allowed TACs | | 0..<max noofAll owedAr eas> | | | - | |
| >>TAC | M | | 9.3.3.10 | The TAC of the allowed TAI. | - | |
| >Not Allowed TACs | | 0..<max noofAll owedAr eas> | | | - | |
| >>TAC | M | | 9.3.3.10 | The TAC of the not-allowed TAI. | - | |
| Last E-UTRAN PLMN Identity | O | | PLMN Identity9.3.3.5 | Indicates the E-UTRAN PLMN | YES | ignor e |
| | | | | ID from where the UE formerly handed over to 5GS and which is preferred in case of subsequent mobility to EPS. | | |
| Core Network Type Restriction for Serving PLMN | O | | ENUMERATE D (EPCForbidden, ...) | Indicates whether the UE is restricted to connect to EPC for the Serving PLMN as specified in TS 23.501. | YES | ignor e |
| Core Network Type Restriction for Equivalent PLMNs | | 0..<max noofEP LMNs> | | | YES | ignor e |
| >PLMN Identity | M | | 9.3.3.5 | Includes any of the Equivalent PLMNs listed in the Mobility Restriction List IE for which CN Type restriction applies as specified in TS 23.501. | - | |
| >Core Network Type Restriction | M | | ENUMERATE D (EPCForbidden, 5GCForbidden,. ..) | Indicates whether the UE is restricted to connect to EPC or to 5GC for this PLMN. | | |
| NPN Mobility Information | O | | 9.3.1.184 | | YES | reject |

For reference, in the example in Table 3, 9.3.3.5, 9.3.3.10, 9.3.1.184, and 9.3.1.126 may be subclauses of TS 38.413 V17.3.0.

The examples in Table 4 show examples of NPN mobility information.

This IE indicates the access restrictions associated with the NPN.

**[Table 4]**

| IE/Group Name | Presenc e | Range | IE type and reference | Semantics description |
|---|---|---|---|---|
| CHOICE NPN Mobility Information | M | | | |
| >SNPN Mobility Information | | | | |
| >>Serving NID | M | | NID9.3.3.42 | |
| >PNI-NPN Mobility Information | | | | |
| >>Allowed PNI-NPN List | M | | 9.3.3.45 | |

Note that in the example in Table 4, 9.3.3.42, 9.3.3.45 may be subclauses of TS 38. 413 V17.3.0.

Table 5 shows an example of an allowed PNI-NPN list.

This IE includes information about the UE mobility allowed in the PNI-NPN. It includes the allowed PNI-NPNs and whether the UE is allowed access to non-CAG cells for each PLMN.

**[Table 5]**

| IE/Group Name | Presen ce | Range | IE type and reference | Semantics description | Criticali ty | Assig ned Critic ality |
|---|---|---|---|---|---|---|
| Allowed PNI-NPN Item | | 1..<maxno ofEPLMNs +1> | | | | |
| >PLMN Identity | M | | 9.3.3.5 | | | |
| >PNI-NPN Restricted | M | | ENUMERAT ED (restricted, not-restricted, ...) | If set to "restricted", indicates that the UE is not allowed to access non-CAG cells for this PLMN. | | |
| >Allowed CAG List per PLMN | | 1..<maxno ofAllowed CAGsperP LMN> | | | | |
| >>CAG ID | M | | 9.3.3.43 | | | |
| >>CAG with validity condition | O | | 9.X | | YES | reject |

Note that in the examples in Table 5, 9.3.3.5, 9.3.3.43 may be subclauses of TS 38. 413 V17.3.0.

The example in Table 6 is an example of a CAG that includes a validity condition.

This IE, along with the PLMN identifier, is used to identify a Public Network Integration NPN with validity conditions.

**[Table 6]**

| IE/Group Name | Presenc e | Range | IE type and reference | Semantics description |
|---|---|---|---|---|
| CAG ID | M | | BIT STRING (SIZE(32)) | Defined in TS 23.003 V18.0.0. |
| Time validity condition | O | | | |
| Location validity condition | O | | | |

Even if the NG-RAN does not inform the AMF in Step 0 that the NG-RAN has the capability to check the validity condition for the CAG in an NGAP NG SETUP REQUEST message, if the criticality for the CAG with validity condition IE including the content of B) is set to reject, an NG-RAN that does not have the capability to check the validity condition for the CAG may inform the AMF that the NG-RAN cannot understand the IE via an NGAP ERROR INDICATION or other NGAP message. Therefore, the AMF may use Step 2 to determine whether the NG-RAN has the capability to check the validity condition for the CAG. Alternatively, the NG-RAN may separately inform the AMF that the NG-RAN has the capability to check the validity condition for the CAG through NGAP HANDOVER REQUIRED or NGAP HANDOVER REQUEST, NGAP PATH SWITCH REQUEST messages, etc.

The criticality for the CAG with validity condition IE including the content of B) may be set to ignore. In this case, the NG-RAN that does not have the capability to check the validity condition for the CAG shall ignore the contents of the CAG with validity condition IE. The NG-RAN considers only the existing CAG information included in the Allowed PNI-NPN List IE. The terminal may be handed over to an NG-RAN that has the capability to check the validity condition for the CAG. In this case, the AMF may refer to the capabilities of the NG-RAN and transmit a new Allowed CAG list with validity conditions to the NG-RAN. For example, if the NG-RAN to which the terminal is handed over supports the capability related to the validity condition, the AMF may send the new NG-RAN a new Allowed CAG list including the validity condition.

Alternatively, the terminal may be handed over from an NG-RAN that does not have the capability to check the validity condition for CAGs to an NG-RAN that does have the capability to check the validity condition for CAGs. In this case, the NG-RAN may request a new Allowed CAG list including the validity condition from the AMF based on the capability information exchanged in advance over the Xn interface. Alternatively, during the handover procedure, the AMF may always send the NG-RAN the Allowed CAG list including the validity condition. A terminal may move from an NG-RAN that supports the CAG validity condition to an NG-RAN that does not. In this case, the AMF or the source NG-RAN may check the validity condition and determine that it is valid. In this case, the AMF may include the CAG in the Allowed CAS list without the validity condition and send it to the Target NG-RAN.

Step 3: NG-RAN #1 can send the Registration Accept message received from AMF in step 2 to the terminal.

Step 4: The remaining steps of the registration process in Figure 5 and Figure 6 will be performed.

Step 5: Step 5 can be performed as follows for two example cases. The two cases include when the NG-RAN1 supports the CAG with validity condition and the AMF is aware of it, and when the NG-RAN1 does not support the CAG with validity condition and the AMF is aware of it.

If NG-RAN1 supports CAG with validity condition and the AMF is aware of it, the AMF and NG-RAN #1 can still check the validity condition for individual CAGs included in the terminal's Allowed CAG list. The AMF may determine that the NG-RAN #1 is able to determine that the CAG is valid. If a particular CAG is no longer valid (i.e., the validity condition for that CAG has not been achieved), NG-RAN #1 shall determine that the terminal is not served by that CAG. If a particular invalid satisfies the validity condition again, the corresponding CAG has changed to a valid state, and NG-RAN #1 shall therefore determine that the terminal can be served again in that CAG.

If NG-RAN1 does not support CAG with validity condition and the AMF is aware of this, the AMF can check the validity condition when the terminal is in an NG-RAN that does not support CAG with validity condition. If the validity changes, the AMF may update the Allowed CAG list, i.e. the AMF continues to check the validity condition for individual CAGs in the terminal's Allowed CAG list to determine if the CAG is valid. If a particular CAG is no longer valid (i.e., the validity condition for that CAG has not been achieved), the AMF sends a signaling to the NG-RAN to exclude that CAG from the Allowed CAG list. Alternatively, if a particular invalid CAG becomes valid by satisfying the validity condition again, the AMF sends a signaling to the NG-RAN to add the CAG to the Allowed CAG list.

Step 6: If Step 5 determines that a terminal is unserved in a particular CAG based on the Validity condition, NG-RAN #1 may execute one or more of Steps 6a, 6b, or 6c.

If one or more of the valid CAG IDs included in the Allowed CAG list can still be supported by the cell that the terminal is currently accessing, NG-RAN #1 shall continue to serve the terminal over that cell without taking any further action. At this point, a new NGAP message may be defined or a new cause value or indication may be added to an existing NGAP message to inform the AMF that the terminal can continue to be served by that cell.

It is possible that not all valid CAG IDs included in the Allowed CAG list can be supported by the cell that the terminal is currently accessing. In this case, NG-RAN #1 may handover the terminal to one of the neighboring cells that can support the valid CAG IDs included in the Allowed CAG list (CAG IDs without validity conditions or CAG IDs that satisfy the validity conditions, if any). For the examples in FIG. 7a and FIG. 7b, NG-RAN #1 performs, for the terminal, an Xn-based handover or an NG-based handover to NG-RAN #2. The NG-RAN may notify the AMF that a handover has been initiated because the validity of a particular CAG has changed according to the validity condition. To notify the AMF, the NG-RAN may include a new cause value or indication in the NGAP HANDOVER REQUIRED or NGAP PATH SWITCH REQUEST message.

It is possible that all valid CAG IDs included in the Allowed CAG list are not supported by the cell that the terminal is currently accessing and that the neighboring cells of NG-RAN #1 do not support those valid CAGs. In this case, NG-RAN #1 may request a release for the terminal by sending a NGAP UE CONTENT RELEASE REQUEST message to the AMF. In this case, NG-RAN #1 may inform the AMF that it is unable to support all valid CAG IDs included in the Allowed CAG list by means of a cause value or indication.

Even if the AMF does not know whether NG-RAN1 supports CAG with validity condition or not, the AMF may know the decision of NG-RAN #1 based on the cause value or indication transmitted by NG-RAN #1.

Step 7: The AMF may transmit the newly updated Allowed CAG list to the terminal via the UE Configuration Update procedure only if the following two conditions are met:
- If a terminal does not have the capability to validate the validity condition for a CAG, but the subscription data for that terminal includes a CAG with a validity condition.
- In Step 5, if the validity of a specific CAG changes based on the Validity condition (invalid CAG becomes valid CAG or valid CAG becomes invalid CAG)

At this point, the AMF may send a UE Configuration Update Command message to the terminal including the updated Allowed CAG list information. For example, the updated Allowed CAG list information may include the following examples:
CAG ID(s) not related to the validity condition
If a time validity condition exists and the condition is satisfied, the CAG ID(s) related to the validity condition (in this case, information about the time validity condition is not transmitted to the terminal)
If a location validation condition exists, the CAG ID(s) related to that validation condition (in this case, information about the location validation condition is not transmitted to the terminal)
Note that the actions in step 7 may be performed before step 6 or concurrently with step 6. During Step 6b, NG-RAN #1 may be requested by the AMF to deliver the UE Configuration Update Command message. In this case, NG-RAN #1 may inform the AMF that it is unable to do so by sending a NGAG NAS NON DELIVERY INDICATION message. In this case, the AMF may forward the UE Configuration Update Command message to the terminal via NG-RAN #2 after the handover for that terminal has been completed.

The AMF may know that the NG-RAN has the capability to check the validity condition for the CAG through Step 0 or Step 2. The AMF may perform the UE Context Release procedure if it receives the NGAP UE CONTEXT RELEASE REQUEST message in Step 6c. Otherwise, the AMF may only forward the UE Configuration Update Command message to the terminal and may not execute the UE Context Release procedure.

Step 8: If the AMF receives Step 6c from NG-RAN #1, the AMF executes the UE Context Release procedure. At this time, the AMF may forward the UE Configuration Update Command message to the terminal in Step 7a. In this case, it performs Step 8 after receiving the UE Configuration Update Complete message from the terminal.

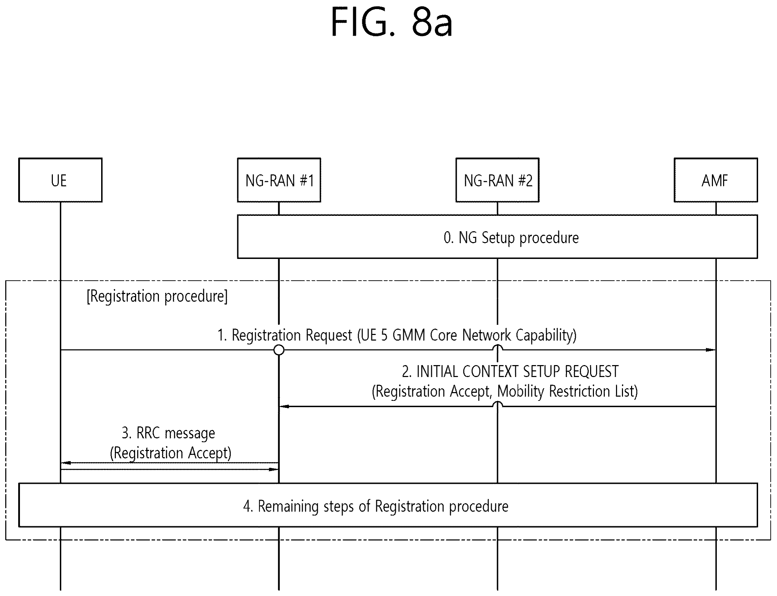

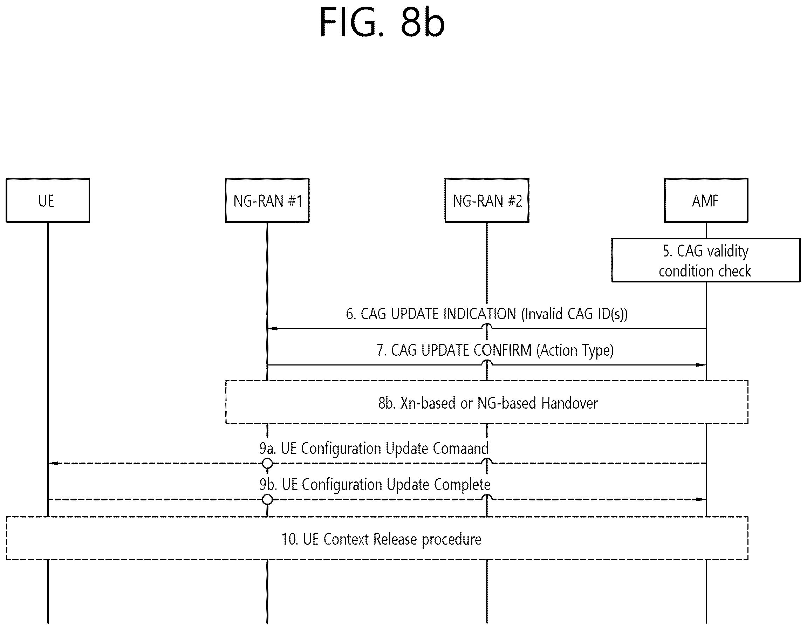

In the following, an example of only AMF checking for the validity condition for CAG, is described referring to the examples in FIG. 8a and FIG. 8b.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

**FIGS. 8a** **and** **8b** **illustrate a second example of a procedure for checking a validity condition, according to one embodiment of the present disclosure.**

FIGS. 8a and 8b illustrate situations where the AMF may determine that a particular CAG within the Allowed CAG list for a terminal is no longer valid based on a validity condition. In such a situation, it is illustrated how the network may continue to provide services (e.g., localized service, VMR, etc.) for that terminal.

In the examples of FIGS. 8a and 8b, the NG-RAN may continue to check the validity condition for each CAG to determine whether the corresponding CAG value is valid within the Allowed CAG List. However, unless requested by the AMF, the NG-RAN may not perform any of the separate actions described in FIGS. 7a and 7b. Alternatively, the NG-RAN may not continuously check the validity condition of the CAG even though it has the capability to check the validity condition of the CAG. The NG-RAN may check the validity condition of each CAG only at the moment when a handover is required for the terminal or when the terminal transitions from RRC_INACTIVE to RRC_CONNECTED state. In these cases, the NG-RAN can determine whether the CAG value is valid within the Allowed CAG List at that time. Alternatively, the NG-RAN may not have the capability to check the validity condition for a CAG at all. Therefore, the examples of FIGS. 8a and 8b are applicable even in situations where the AMF does not know whether the NG-RAN has the capability to check the validity condition for the CAG.

Step 0: To generate an NG interface between each the NG-RAN and the AMF, the NG-RAN may send an NGAP NG SETUP REQUEST message to the AMF. This starts the NG setup procedure. If the individual NG-RAN has the capability to check the validity condition for the CAG, the NG-RAN informs the AMF of this fact in a NGAP NG SETUP REQUEST message. The AMF responds to the NG-RAN by sending a NGAP NG SETUP RESPONSE message. If the AMF supports a feature for a CAG with a validity condition, the AMF may also notify the NG-RAN of its support in a NGAP NG SETUP RESPONSE message.

NG-RANs can also use the Xn interface to exchange information about whether each node has the capability to check the validity condition for the CAG.

Step 1: This can be performed in the same way as step 1 in Figure 7a and Figure 7b.

Step 2: If the AMF decides to grant the registration request for the terminal, it requests NG-RAN #1 to create a UE context using the INITIAL CONTEXT SETUP REQUEST message. The AMF may also generate a Registration Accept message to be delivered to the terminal. The AMF may send an INITIAL CONTEXT SETUP REQUEST message including the Registration Accept message to NG-RAN #1.

At this point, for a terminal that has the capability to check the validity condition for the CAG, the AMF may send a Registration Accept message including the Allowed CAG list information. Here, the Allowed CAG list information is as shown in the following example:
- CAG ID(s) not related to the validity condition

CAG ID(s) including Validity condition, e.g., CAG(s) + time validity condition and/or location validity condition
It is also possible that the terminal does not have the capability to check the validity condition for a CAG, but the subscription data for the terminal includes a CAG with a validity condition. In this case, the AMF may send a Registration Accept message including the Allowed CAG list information. Here, the Allowed CAG list information is shown in the following example:
   - CAG ID(s) not related to the validity condition
   - If a time validity condition exists and the condition is satisfied, the CAG ID(s) related to the validity condition (→ no information about the time validity condition is transmited to the terminal)
   - If a location validation condition exists, the CAG ID(s) related to that validation condition (→ information about the location validation condition is not transmitted to the terminal)
The AMF may include the following Allowed CAG list contents in the Mobility Restriction List IE included in the INITIAL CONTENT SETUP REQUEST message. This allows the AMF to forward the INITIAL CONTENT SETUP REQUEST message including the Allowed CAG list to NG-RAN #1. An example of the Allowed CAG list is shown below:
   A) CAG ID(s) not related to the validity condition.
   B) If a time validity condition exists and the condition is satisfied, the CAG ID(s) related to the validity condition (→ information about the time validity condition is not transmitted to the terminal)

Even if the NG-RAN does not inform the AMF in Step 0 that the NG-RAN has the capability to check the validity condition for the CAG in an NGAP NG SETUP REQUEST message, if the criticality for the CAG with validity condition IE including the content of B) is set to reject, an NG-RAN that does not have the capability to check the validity condition for the CAG may inform the AMF that the NG-RAN cannot understand the IE via an NGAP ERROR INDICATION or other NGAP message. Therefore, the AMF may use Step 2 to determine whether the NG-RAN has the capability to check the validity condition for the CAG. Alternatively, the NG-RAN may separately inform the AMF that the NG-RAN has the capability to check the validity condition for the CAG through NGAP HANDOVER REQUIRED or NGAP HANDOVER REQUEST, NGAP PATH SWITCH REQUEST messages, etc.

The criticality for the CAG with validity condition IE including the content of B) may be set to ignore. In this case, the NG-RAN that does not have the capability to check the validity condition for the CAG shall ignore the contents of the CAG with validity condition IE. The NG-RAN considers only the existing CAG information included in the Allowed PNI-NPN List IE. The terminal may be handed over to an NG-RAN that has the capability to check the validity condition for the CAG. In this case, the AMF may refer to the capabilities of the NG-RAN and transmit a new Allowed CAG list with validity conditions to the NG-RAN. For example, if the NG-RAN to which the terminal is handed over supports the capability related to the validity condition, the AMF may send the new NG-RAN a new Allowed CAG list including the validity condition.

Alternatively, the terminal may be handed over from an NG-RAN that does not have the capability to check the validity condition for CAGs to an NG-RAN that does have the capability to check the validity condition for CAGs. In this case, the NG-RAN may request a new Allowed CAG list including the validity condition from the AMF based on the capability information exchanged in advance over the Xn interface. Alternatively, during the handover procedure, the AMF may always send the NG-RAN the Allowed CAG list including the validity condition. A terminal may move from an NG-RAN that supports the CAG validity condition to an NG-RAN that does not. In this case, the AMF or the source NG-RAN may check the validity condition and determine that it is valid. In this case, the AMF may include the CAG in the Allowed CAS list without the validity condition and send it to the Target NG-RAN.

The AMF may know in advance that NG-RAN #1 does not have the capability to check the validity condition for the CAG. In this case, the AMF may include the following Allowed CAG list contents in the Mobility Restriction List IE included in the INITIAL CONTENT SETUP REQUEST message. The AMF may also send an INITIAL CONTENT SETUP REQUEST message including the Allowed CAG list to NG-RAN #1. The following is an example of the Allowed CAG list:
a) CAG ID(s) not related to the validity condition
b) If a time validity condition exists and the condition is satisfied, the CAG ID(s) related to the validity condition (e.g., information about the time validity condition is not transmitted to the terminal)
c) If a location validation condition exists, the CAG ID(s) related to that validation condition (e.g., information about the location validation condition is not transmitted to the terminal)
NOTE: In this case, an NG-RAN that does not have the capability to check the validity condition for the CAG may trigger a handover to an NG-RAN that does have the capability to check the validity condition for the CAG. For example, to trigger such a handover, the NG-RAN may include the information related to a), b), and c) in the CAG ID IE in the Allowed PNI-NPN List IE in TS 38.413. Therefore, an NG-RAN that does not have the capability to check the validity condition for a CAG may select a cell that supports CAG ID(s) in b) or c) as a target cell during the handover process. When the AMF realizes that the terminal has moved to an NG-RAN that has the capability to check the validity condition for the CAG through handover, it may forward the Allowed CAG list information set in the form of the following example back to the NG-RAN:
- CAG ID(s) not related to the validity condition
- CAG ID(s) including validity condition, i.e., CAG(s) + time validity condition and/or location validity condition

NOTE: The UDM may determine to include a validity condition when sending CAG information to the AMF, depending on whether the AMF supports validity conditions. For example, if the AMF supports validity conditions, the validity condition is included with the CAG information. If the AMF does not support the validity condition, the UDM can check the validity condition directly. Only if the validity condition is satisfied, the UDM may exclude the validity condition and transmit only the CAG Identifier that satisfies the validity condition in the CAG information. If the UDM wants to know the exact location / time zone information of the terminal, it can subscribe to the AMF event for the location / time zone information of the terminal.

At this point, a new entry for validity condition can be defined in the list of Supported Features as defined in clause 6.1.8 of TS 29.503 V18.0.0. Based on this, the AMF can inform the UDM whether it supports the validity condition or not. This also allows the UDM to decide whether to send the validity condition when sending CAG information to the AMF. The feature number for CAG Validity Condition support is set to 16 in the example below, but this is for illustrative purposes only and may be set to other values.

An example of Feature Negotiation, clause 6.1.8 of TS 29.503 is described.

The optional features in table 7 are defined for the Nudm_SDM API. They shall be negotiated using the extensibility mechanism defined in clause 6.6 of 3GPP TS 29.500 V18.0.0.

Optional features according to the examples in Table 7 may be defined for the Nudm_SDM API. These features may be negotiated using the extensibility mechanisms defined in S6.6 of 3GPP TS 29.500 V18.0.0.

**[Table 7]**

| Feature number | Feature Name | Description |
|---|---|---|
| 1 | SharedData | When receiving a Nudm_SDM_Get service operation request to retrieve a UE's individual subscription data, and the request does not contain a supported-features query parameter indicating support of this feature, the UDM shall not include Shared Data Ids in the response. Instead the UDM may - based on operator policy - take no further action (i.e. allow the UE to get services based on only the UE's individual subscription data), or send the shared data as individual data (this may result in notifications of individual subscription data change |
| | | - if so subscribed - when shared data, which are sent as individual data, are modified, and/or when the UE's Shared Data IDs are modified). |
| 2 | ImmediateReport | When a NF consumer detects the UDM support ImmediateReport feature, it can indicate an immediateReport flag when invoking |
| | | Nudm_SDM_Subscribe service operation. If UDM supports ImmediateReport received Nudm_SDM_Subscribe service operation request, it shall return the resource representation(s) of the monitored resource(s) in the service operation response body. |
| 3 | PatchReport | If some of the modifications included in the PATCH request are not successfully implemented, the UDM reports the result of PATCH request execution to the consumer. See clause 5.2.7.2 of 3GPP TS 29.500. |
| 4 | Nssaa | If the NF consumer does not support this feature, the UDM shall not include information of S-NSSAI(s) subject to Network Slice-Specific Authentication and Authorization in Get response messages, immediate reports within Subscribe response messages, or data change notifications where the data change is limited to S-NSSAI(s) subject to Network Slice-Specific Authentication and Authorization. |
| 5 | CAGFeature | If the NF consumer does not support this feature, the UDM shall not include CAG information list in the message body with "200 OK" response (clause 5.2.2.2.3). The UDM performs action as executes step 2c of clause 5.3.2.2.2 and 5.3.2.2.3 of 3GPP TS 29.500 if UE is allowed to access 5GS via CAG cell(s) only. |
| 6 | SharedDataTreatment | This feature is an extension to the SharedData feature, i.e. support of SharedDataTreatment requires support of SharedData.When receiving a Nudm_SDM_Get service operation request to retrieve a UE's individual subscription data, and the request does not contain a supported-features query parameter indicating support of this feature, the UDM shall not include SharedDataTreatments in the SharedData returned in |
| | | the response. Instead the UDM may - based on operator policy - take no further action (i.e. allow the UE to get services based on default treatment (i.e. individual data take precedence), or send the shared data which have non-default treatment as individual data. |
| 7 | sorTransparentSupport | This flag indicates NF Consumer (e.g. AMF) support of receiving SoR Transparent Container instead of individual IEs from NF Producer (e.g. UDM). If the NF consumer does not support this feature, the NF Producer shall not include sorTransparentContainer, as defined in clause 6.1.6.2.26 of 3GPP TS 29.500.Corresponding flag is also used by UDM to register (in NRF) its support of receiving SoR Transparent Container instead of individual IEs from the NF Consumer (e.g. AMF). If the UDM does not support this feature, the NF Consumer shall not include sorTransparentContainer, as defined in clause 6.1.6.2.25 of 3GPP TS 29.500. |
| 8 | Nsac | If the NF consumer does not support this feature, the UDM shall not include network slice admission control related information for S-NSSAI(s) in the message body with "200 OK" response (See clause 5.2.2.2.3 of 3GPP TS 29.500). |
| 9 | SharedSmSubsData | If the NF consumer does not support this feature, the UDM shall not take the alternative to include extendedSmSubsData in SmSubsData (clause 6.1.6.2.79 of 3GPP TS 29.500). |
| 10 | ENA | Enhanced Network Automation. |
| | | If the UDM supports this feature, the UDM shall apply the nfChangeFilter IE received in the sdmSubscription and send the notifications accordingly (See clause 6.1.6.2.16 and 6.1.6.2.70 of 3GPP TS 29.500). |
| 11 | Nssrg | The NF consumer (i.e. AMF) that supports this feature shall support handling of NSSRG information received along with the subscribed S-NSSAIs as defined in clause 5.15.12 of 3GPP TS 23.501.If the NF consumer does not support this feature, the UDM may select the subset of the compatible Subscribed S-NSSAIs without including any information of Network Slice Simultaneous Registration Group. |
| 12 | upuTransparentSupport | This flag indicates NF Consumer (e.g. AMF) support of receiving UE Parameters Update Transparent Container instead of individual IEs from NF Producer (e.g. UDM). If the NF consumer does not support this feature, the NF Producer shall not include upuTransparentContainer, as defined in clause 6.1.6.2.33.Corresponding flag is also used by UDM to register (in NRF) its support of receiving UE Parameters Update Transparent Container instead of individual IEs from the NF Consumer (e.g. AMF). If the UDM does not support this feature, the NF Consumer shall not include upuTransparentContainer, as defined in clause 6.1.6.2.25 of 3GPP TS 29.500. |
| 13 | LimitedSubscriptions | An NF consumer supporting this feature shall use one subscription for the changes of subscription data sets per UE without additional filter criteria, or with a specific filter criteria (e.g. dnn and/or singleNssai). An NF consumer supporting this feature shall use one subscription for the changes of shared data sets. |
| 14 | SNPN-ID | Support of SNPN-ID |
| | | This flag indicates whether the NF Consumer (e.g. AMF) or NF producer (UDM) support receiving an SNPN-ID as an extension of the "plmn-id" query parameter, when retrieving Access And Mobility |
| | | Subscription Data (either by querying the "{supi}" resource or the "{supi}/am-data" resource). |
| | | If the NF Consumer is aware (e.g. from previous interactions) that the UDM does not support this feature, the NF Consumer should not send queries on the Nudm_SDM API including SNPN-ID in the "plmn-id" query parameter. |
| | | Also, if the NF Consumer sent such query to UDM, and the UDM does not indicate support of this feature in the response, the NF Consumer should consider the response as invalid, since the response from UDM would have not considered the presence of the NID component of the SNPN-ID in the "plmn-id" parameter. |
| 15 | UeConSmfDataSubFilter | UE Context in Smf Data Subscription Filter |
| | | If the UDM supports this feature, the UDM shall handle the ueConSmfDataSubFilter IE received in the sdmSubscription and sends the notifications only for changes indicated in the IE. |
| 16 | CAGValidityCondition | If the NF Consumer does not support this feature, the UDM MUST NOT include the validity condition of the CAG information list in messages including a "200 OK" response. |
| | | (If the NF consumer does not support this feature, the UDM shall not include the validity condition of CAG information list in the message body with "200 OK" response (clause 5.2.2.2.3 of 3GPP TS 29.500)) |
| | | In this case, if the NF supports the CAGFeature, the UDM can send a CAG Identifier to the AMF that satisfies the validity condition. In this case, the UDM |
| | | may exclude the validity condition. The UDM may also send an updated CAG Identifier to the AMF if the validity condition changes. |

The examples in Table 17 are examples of supported features.

Step 3: NG-RAN #1 can send the Registration Accept message received from AMF in step 2 to the terminal.

Step 4: The remaining steps of the registration process in Figure 5 and Figure 6 will be performed.

Step 5: The AMF may continue to check the validity condition for individual CAGs included in the terminal's Allowed CAG list and determine if the CAG is valid. It is possible that a particular CAG is no longer valid (i.e., the validity condition for that CAG has not been achieved). In this case, the AMF may determine that the terminal is not serviced by that CAG. A CAG that had an invalid validity condition may meet the validity condition again (e.g., change from invalid to valid). In this case, the AMF may determine that the CAG has changed to a valid state and therefore the terminal is again eligible for service in that CAG.

NG-RAN1 does not support CAG with validity condition, and the AMF may know that NG-RAN1 does not support it. In this case, the following example operation may be applied. A terminal may be connected to an NG-RAN that does not support CAG with validity condition. In this situation, the AMF may check the validity condition and update the Allowed CAG list if the validity changes. In other words, the AMF may continue to check the validity condition for individual CAGs included in the Allowed CAG list for that terminal and determine if the CAG is valid. If a particular CAG is no longer valid (i.e., the validity condition for that CAG has not been achieved) or if a particular invalid CAG becomes valid again (i.e., the validity condition for that CAG has been achieved again), the AMF may send the newly updated Allowed CAG list to the NG-RAN in Step 6.

The AMF may be aware that the terminal and NG-RAN #1 do not have the capability to check the validity condition for the CAG. In this case, the AMF may omit steps 6 to 10 and initiate the UE Configuration Update procedure according to Clause 4.2.4.2 of TS 23.502.

Step 6: Step 6 can be performed as follows for two case examples. The two cases include when the NG-RAN1 supports the CAG with validity condition and when the NG-RAN1 does not support the CAG with validity condition.

If NG-RAN1 supports CAG with validity condition, the following operation may be performed. In this case, in Step 5, the AMF may determine that the terminal is not served by a particular CAG based on the validity condition (i.e., the CAG is invalid). In this case, the AMF may send an NGAP CAG UPDATE INDICATION message to NG-RAN #1 to inform it that the specific CAG included in the terminal's Allowed CAG list has changed to an invalid state. Based on the message sent, the AMF may request confirmation that NG-RAN #1 can continue to support the terminal. Instead of using the NGAP CAG UPDATE INDICATION message, the AMF may include an indication in the conventional message requesting re-evaluation of the CAG validity condition.

If NG-RAN1 does not support CAG with validity condition, the following operation can be performed. If a specific CAG becomes an invalid CAG according to the validity condition in Step 5, the AMF may send a newly updated Allowed CAG list to NG-RAN #1. The AMF may perform an AN Release procedure if necessary (e.g., if it determines that the terminal is no longer served by the current cell).

Alternatively, in Step 5, the AMF may determine that a particular CAG in the terminal's Allowed CAG list is no longer valid (i.e., the validity condition for that CAG has not been achieved). In this case, the AMF may send a newly updated Allowed CAG list to the NG-RAN1 and then perform one or more of the following actions, depending on the operator's policy
- Based on a pre-configured timer, the AMF may delay the execution of the AN release procedure. If the handover of the terminal occurs before the timer expires, the AMF may skip the AN release procedure.
- It is also possible that a particular CAG is no longer valid in the terminal's Allowed CAG list because the validity condition for that CAG is not achieved. In this case, the AMF may skip the AN release procedure. If a change in subscription information causes a CAG to no longer be valid in the terminal's Allowed CAG list, the AMF may perform an AN release.

NOTE: For reference, the AMF can also send the newly updated Allowed CAG list to the NG-RAN1 via Step 9 instead of Step 6.

Step 7: NG-RAN#1 may send a CAG Update confirm message including action type information to the AMF.

If NG-RAN1 supports CAG with validity condition, NG-RAN #1 can determine the valid CAG IDs in the Allowed CAG list of the terminal based on the Invalid CAG ID(s) received in Step 6. NG-RAN#1 may compare the valid CAG IDs in the Allowed CAG list with the CAG list supported by the cell currently accessed by the terminal. Accordingly, NG-RAN#1 may determine whether the current cell can continue to serve the terminal. NG-RAN#1 may also notify the AMF of the result of the decision via Action Type IE included in the NGAP CAG UPDATE CONFIRM message.

One or more of the valid CAG IDs included in the Allowed CAG list may still be supported by the cell currently being accessed by the terminal. In this case, NG-RAN #1 may set the "Action Type IE = CAG supported" in the CAG Update confirm message. Upon receiving this, the AMF shall not proceed with any further action unless the execution conditions in Step 9 are satisfied. (For example, it does not perform an AN Release).

If all the valid CAG IDs included in the Allowed CAG list cannot be supported by the cell that the terminal is currently accessing and NG-RAN #1 decides to handover the terminal to one of the neighboring cells that can support the valid CAG IDs included in the Allowed CAG list, NG NG-RAN #1 may set the Action Type IE to "Action Type IE = Handover trigger due to updated CAG(s)". NG-RAN #1 may also forward the NGAP CAG UPDATE CONFIRM message to the AMF, and then perform Step 8.

Alternatively, all the CAG IDs included in the newly updated Allowed CAG list may not be supported by the cell that the terminal is currently accessing, and the neighboring cells of NG-RAN #1 may not support those CAGs either. In this case, NG-RAN #1 may decide to release the terminal. In this case, NG-RAN #1 may set the Action Type IE to "Action Type IE = Release request due to CAG(s) not supported". The AMF that receives this Action Type IE may skip Step 8 and perform Steps 9 and 10.

NOTE: If NG-RAN #1 may determine the valid CAG IDs in the Allowed CAG list of the terminal, based on the Invalid CAG ID(s) received in Step 6, it can determine the valid CAG IDs in the Allowed CAG list of the terminal. NG-RAN #1 may not support the operation of comparing valid CAG IDs to the list of CAGs supported by the cell currently accessed by the terminal to determine if the terminal can continue to be served by the current cell. In this case, NG-RAN #1 MAY send a NGAP CAG UPDATE REJECT or NGAP ERROR INDICATION message to the AMF to inform the AMF that it does not support this operation.

NOTE: Rather than informing NG-RAN #1 of the Invalid CAG ID(s) in Step 6, the AMF may simply request the CAG ID(s) supported by the cell currently being accessed by the terminal, and upon receiving such a request, NG-RAN #1 may forward it to the AMF in Step 7, including the CAG ID(s) supported by the cell currently being accessed by the terminal, instead of Action Type IE. Alternatively, it may proactively inform the AMF of the CAG ID(s) that can be supported by the cell whenever the cell serving the terminal changes. Based on this, the AMF may compare the list of valid CAGs in the Allowed CAG list with the list of CAGs supported by the cell currently accessed by the terminal to determine if the terminal can continue to be served by the current cell.

The validity condition of one or more of the valid CAG IDs included in the Allowed CAG list may change from invalid to valid, or from valid to invalid. One or more of the valid CAG IDs may still be supported by the cell currently being accessed by the terminal. In such cases, the AMF shall take no further action except to satisfy the execution conditions in Step 9. All valid CAG IDs included in the Allowed CAG list may not be supported by the cell currently being accessed by the terminal. In this case, the AMF may send a NGAP message to request NG-RAN #1 to handover the terminal to one of the neighboring cells that can support the valid CAG IDs included in the Allowed CAG list. In this case, NG-RAN #1 may perform Step 8 based on the request sent by the AMF. Alternatively, all valid CAG IDs included in the Allowed CAG list may not be supported by the cell that the terminal is currently accessing. In this case, the AMF may decide to issue an AN release for the terminal. Therefore, the AMF executes Steps 9 and 10.

Step 8: In Step 7, NG-RAN #1 may decide that "Action Type IE = Handover trigger due to updated CAG(s)". In this case, NG-RAN #1 may trigger an Xn-based or NG-based handover for that terminal to one of the neighboring cells that can support the valid CAG IDs included in the Allowed CAG list.

Step 9: The AMF may transmit the newly updated Allowed CAG list to the terminal via the UE Configuration Update procedure only if the following two conditions are met:
- If a terminal does not have the capability to validate the validity condition for a CAG, but the subscription data for that terminal includes a CAG with a validity condition.
- In Step 5, if the validity of a specific CAG changes based on the Validity condition (invalid CAG becomes valid CAG or valid CAG becomes invalid CAG)

At this point, the AMF may send a UE Configuration Update Command message to the terminal including the updated Allowed CAG list information. For example, the updated Allowed CAG list information may include the following examples:
- CAG ID(s) not related to the validity condition
- If a time validity condition exists and the condition is satisfied, the CAG ID(s) related to the validity condition (in this case, information about the time validity condition is not transmitted to the terminal)
- If a location validation condition exists, the CAG ID(s) related to that validation condition (in this case, information about the location validation condition is not transmitted to the terminal)

The AMF may knows that NG-RAN #1 does not have the capability to check the validity condition for the CAG. In this case, the AMF may include the updated Allowed CAG list contents in the NGAP DOWNLINK NAS TRANSPORT message that includes the UE Configuration Update Command message or in the Mobility Restriction List IE included in a separate NGAP message. For example, the AMF may send a NGAP DOWNLINK NAS TRANSPORT message or a separate NGAP message to NG-RAN #1 including the updated Allowed CAG list contents. An example of the updated Allowed CAG list content is shown below:
- CAG ID(s) not related to the validity condition
- If a time validity condition exists and the condition is satisfied, the CAG ID(s) related to the validity condition (in this case, information about the time validity condition is not transmitted to the terminal)
- If a location validation condition exists, the CAG ID(s) related to that validation condition (in this case, information about the location validation condition is not transmitted to the terminal)

In Step 7, the AMF may have received "Action Type IE = Handover trigger due to updated CAG(s)". In this case, after the end of the handover procedure to NG-RAN #2 for that terminal in Step 8, the AMF may request the delivery of the UE Configuration Update Command message via NG-RAN #2.

Step 10: If in Step 7 the AMF received "Action Type IE = Release request due to CAG(s) not supported", the AMF may perform Step 10. At this time, in Step 9a, the AMF may have sent a UE Configuration Update Command message to the terminal. In this case, the AMF may perform Step 10 after receiving the UE Configuration Update Complete message from the terminal.

The various embodiments of the disclosure described with reference to FIGS. 7a and 7b and/or FIGS. 8a and 8b can be applied in the same manner when the location validity condition is enforced by the AMF, the NG-RAN, or the terminal. For example, the location validity condition may be provided to the AMF, the NG-RAN, or the terminal. Based on the validity condition, each node, such as the AMF, NG-RAN, or terminal, can determine whether a particular CAG is valid or invalid based on whether it satisfies the location validity condition. Therefore, the various examples of the present disclosure may be equally applicable to cases where the CAG validity status changes depending on whether the location validity condition is satisfied or not.

Various examples of disclosures herein may be applied, such as the following examples

The extension of CAGs based on validity information is described.

According to the prior art, PNI-NPNs with CAGs do not support hosting localized services.

A CAG identifier in the list of allowed CAGs can be associated with a time validity condition.

### <UE MM Core Network Capability handling>

For UE MM Core Network Capability handling, various examples of the disclosure of the present disclosure may be applied.

The UE MM Core Network Capability is split into the S1 UE network capability (mostly for E-UTRAN access related core network parameters) and the UE 5GMM Core Network Capability (mostly to include other UE capabilities related to 5GCN or interworking with EPS) and includes non radio-related capabilities, e.g. the NAS security algorithms, etc. The S1 UE network capability is transferred between all CN nodes at AMF to AMF, AMF to MME, MME to MME, and MME to AMF changes. The UE 5GMM Core Network Capability is transferred only at AMF to AMF changes.

In order to keep the UE MM core network capability information stored in the AMF up to date (e.g., to handle cases where the USIM is moved to another terminal while out of coverage and the previous terminal has not sent a Detach message, and for inter-RAT registration area updates), the following may apply The UE shall send the UE MM core network capability information to the AMF during the initial registration and mobility registration update procedures in the NAS message.

The AMF shall always store the latest UE MM core network functions received from the UE. Any UE MM core network functions that the AMF receives from a previous AMF/MME shall be replaced when the UE provides the UE MM core network functions with the registration signal.

If the UE's UE MM Core Network Capability information changes (in either CM -CONNECTED or in CM-IDLE state), the UE shall perform a Mobility Registration Upd ate procedure when it next returns to NG-RAN coverage. Clause 4.2.2 of TS 23.502 may be referred.

The UE shall indicate the capabilities supported by the UE within the UE 5GMM core network capability. For example, the following examples of capabilities can be included within the UE 5GMM core network capabilities

Attach in EPC with Request type "Handover" in PDN CONNECTIVITY Request message
- EPC NAS.
- SMS over NAS.
- LCS.
- 5G SRVCC from NG-RAN to UTRAN.
- Radio Capabilities Signalling optimisation (RACS).
- Network Slice-Specific Authentication and Authorization.
- Parameters in network operation supported for 5G CIoT.
- Receiving WUS Assistance Information (E-UTRA).
- Paging Subgrouping Support Indication (NR).
- CAG, clause 5.30.3.3 of TS 23.501 and the various examples of disclosures in the present disclosure.
- See CAGs including validity conditions, clause 5.30.3.3 of TS 23.501, and various examples in the opening of the present disclosure.
- Subscription-based restrictions on network slice concurrent enrollment.
- Support of NSAG.
- Minimization of Service Interruption (MINT).
- Equivalent SNPNs.
- Unavailability Period.

A UE operating two or more USIMs may wish to support and use one or more Multi-USIM features in the PLMN for a USIM. In this case, the UE shall indicate that it supports such one or more Multi-USIM features by means of the following indication in the UE 5GMM core network capability for that USIM:
- Connection Release Supported.
- Paging Cause Indication for Voice Service Supported.
- Reject Paging Request Supported.
- Paging Restriction Supported.

Otherwise, UEs that have the capability of the multi-USIM feature but do not intend to use it shall not indicate support for one or more of these multi-USIM features.

UEs that do not operate more than two USIMs shall indicate that the multi-USIM feature is not supported.

Note: A UE with more than one USIM does not need to use the multi-USIM feature on all USIMs.

### <UE configuration, subscription aspects and storage>

The various examples of the present disclosure can also be applied to UE configuration, subscription aspects and storage.

To use CAG, the UE, that supports CAG as indicated as part of the UE 5GMM Core Network Capability, may be pre-configured or (re)configured with the following CAG information, included in the subscription as part of the Mobility Restrictions:
- an Allowed CAG list i.e. a list of CAG Identifiers the UE is allowed to access; and
- optionally, a CAG-only indication whether the UE is only allowed to access 5GS via CAG cells (see TS 38.304 [50] for how the UE identifies whether a cell is a CAG cell) and;
- optionally, validity condition (i.e. time and/or location) for each CAG Identifiers;

NOTE : The location validity information is used to aid the UE where to search for the CAG cells and is not used for any enforcement.

The HPLMN may configure or re-configure a UE with the above CAG information using the UE Configuration Update procedure for access and mobility management related parameters described in clause 4.2.4.2 of TS 23.502.

The above CAG information is provided by the HPLMN on a per PLMN basis. In a PLMN the UE shall only consider the CAG information provided for this PLMN. The CAG Identifiers with validity condition is provided to the UE only if the UE indicates support of CAG with validity condition. If the UE does not support CAG with validity condition, in the Allowed CAG list, the AMF shall include:
- CAG Identifiers not associated with validity condition; and
- CAG Identifiers associated with time validity condition without including any validity condition if time validity condition is satisfied; and
- CAG Identifiers only associated with location validity condition without including location validity condition.

When the time validity condition becomes invalid, the AMF shall update the Allowed CAG list of the non supporting UE to remove corresponding CAG Identifiers do not satisfy time validity condition.

For example, the UDM may decide to include a validity condition when sending CAG information to the AMF, depending on whether the AMF supports validity conditions. For example, if the AMF supports validity conditions, the validity condition is included with the CAG information. If the AMF does not support the validity condition, the UDM can check the validity condition directly. Only if the validity condition is satisfied, the UDM may exclude the validity condition and transmit only the CAG Identifier that satisfies the validity condition in the CAG information. If the UDM wants to know the exact location / time zone information of the terminal, it can subscribe to the AMF event for the location / time zone information of the terminal.

When the subscribed CAG information changes, the UDM may set a CAG information subscription change indication and send the indication to the AMF. The AMF may provide the CAG information to the UE when the UDM indicates that the CAG information in the access and mobility subscription data has changed. When the AMF receives an indication from the UDM that the CAG information in the access and mobility subscription has changed, the AMF may update the UE using the CAG information received from the UDM. Once the AMF has updated the UE and received confirmation from the UE, the AMF may notify the UDM that the update was successful. The UDM may remove the CAG information subscription change indicator flag.

The AMF may update the UE using either the UE Configuration Update procedure after registration procedure is completed, or by including the new CAG information in the Registration Accept or in the Registration Reject or in the Deregistration Request or in the Service Reject.

When the UE is roaming and the Serving PLMN provides CAG information, the UE may update only the CAG information provided for the Serving PLMN while the stored CAG information for other PLMNs are not updated. When the UE is not roaming and the HPLMN provides CAG information, the UE may update the CAG information stored in the UE with the received CAG information for all the PLMNs.

The UE stores the latest available CAG information for all provided PLMNs and can keep it even when the UE is deregistered or switched off.

CAG information can be applied to 5GS.

NOTE: CAG information does not affect whether and how a UE accesses 5GS via non-3GPP access.

### <Network and cell (re-)selection, and access control>

The various examples of the disclosure can be applied to network and cell (re-)selection, and access control.

The assumptions for network and cell selection and access control are as follows
- A CAG cell can broadcast information so that only UEs that support CAG can access the cell;
   NOTE: The above implies that the cell is a CAG cell or a regular PLMN cell. For network sharing scenarios between SNPN, PNI-NPN and PLMN, refer to TS23.501 S5.18.
- In order to prevent access to NPNs for authorized UE(s) in the case of network congestion/overload, existing mechanisms defined for Control Plane load control, congestion and overload control in clause 5.19 can be used, as well as the access control and barring functionality described in clause 5.2.5, or Unified Access Control using the access categories as defined in TS 24.501 can be used.
- Aspects of automatic and manual network selection related to CAG can be referred to TS 23.122;
- For aspects related to cell (re-)selection, see TS 38.304;
- The Mobility Restrictions shall be able to restrict the UE's mobility according to the Allowed CAG list (if configured in the subscription). The Mobility Restrictions indicate whether the UE is only allowed to access 5GS via CAG cells (if configured in the subscription) as described in clause 5.30.3.3;
- If the CAG identifier is associated with a time validity condition as described in clause 5.30.3.3, the AMF and the NG-RAN shall check that the time validity condition is satisfied. If the UE is accessing a cell that supports a CAG identifier in the list of allowed CAGs and the time validity condition of the CAG identifier is not valid, the NG-RAN may trigger the handover procedure.
- During transition from CM-IDLE to CM-CONNECTED and during Registration after connected mode mobility from E-UTRAN to NG-RAN as described in clause 4.11.1.2.2 of TS 23.502 [3]:
- During transition from CM-IDLE to CM-CONNECTED and during Registration after connected mode mobility from E-UTRAN to NG-RAN as described in clause 4.11.1.2.2 of TS 23.502:
- The AMF can check whether UE access is allowed by mobility restrictions:
   NOTE 2: It is assumed that the AMF is made aware of the supported CAG Identifier(s) of the CAG cell by the NG-RAN.
- If the UE is accessing the 5GS via a CAG cell and if at least one of the CAG Identifier(s) received from the NG-RAN is part of the UE's Allowed CAG list, then the AMF accepts the NAS request;
- If the UE is accessing the 5GS via a CAG cell and if none of the CAG Identifier(s) received from the NG-RAN are part of the UE's Allowed CAG list, then the AMF rejects the NAS request and the AMF should include CAG information in the NAS reject message. The AMF shall then release the NAS signalling connection for the UE by triggering the AN release procedure; and
- It is possible that the UE is accessing 5GS through a non-CAG cell and the UE's subscription includes an indication that the UE can only access CAG cells. In this case, the AMF shall reject the NAS request and the AMF shall include the CAG information in the NAS reject message. The AMF shall then trigger the AN release procedure to disconnect the NAS signaling to the UE.
- During the transition from the RRC inactive state to the RRC connected state, the following operations may occur
- The UE may initiate an RRC Resume procedure to transition from the RRC inactive state to the RRC connected state in the CAG cell. In this case, the NG-RAN may reject the UE's RRC Resume request if the CAG identifier supported in the CAG cell is not included in the UE's list of allowed CAGs according to the mobility restrictions received from the AMF, or if list of allowed CAGs is not received from the AMF.
- When a UE initiates an RRC Resume procedure to transition from RRC inactive to RRC connected state in a non-CAG cell, the NG-RAN may reject the UE's Resume request if the UE is only allowed access to CAG cells according to the mobility restrictions received from the AMF.
- During an intra-NG-RAN connection mode mobility procedure (e.g., handover procedure), the following actions may occur
- Source NG-RAN does not handover the UE to a target NG-RAN node if the target is a CAG cell and none of the CAG Identifiers supported by the CAG cell are part of the UE's Allowed CAG list in the Mobility Restriction List or if no Allowed CAG list has been received from the AMF;
- Source NG-RAN does not handover the UE to a non-CAG cell if the UE is only allowed to access CAG cells based on the Mobility Restriction List;
- If the target cell is a CAG cell, the target NG-RAN may reject the N2 based handover procedure if none of the CAG Identifiers supported by the CAG cell are part of the UE's Allowed CAG list in the Mobility Restriction List or if no Allowed CAG list has been received from the AMF;
- If the target cell is a non-CAG cell, target NG-RAN may reject the N2 based handover procedure if the UE is only allowed to access CAG cells based on the Mobility Restriction List.
- For updates of mobility restrictions, the following examples may be applied
- If the AMF receives a Nudm_SDM_Notification from the UDM and determines that the list of allowed CAGs or whether a UE is allowed to access only CAG cells has changed, the following may apply The AMF may update the mobility restrictions of the UE and the NG-RAN accordingly, subject to the conditions described in clause 4.2.4.2 of TS 23.502.

NOTE: If the UE is accessing the network for emergency services, the AMF conditions in clause 5.16.4.3 may apply.

The various examples of present disclosure may also be applied to the following examples.

### <Modification of AN release condition due to update of Allowed CAG list>

For example, based on an update of the list of allowed CAGs, the AN release condition might be modified.

Updated Allowed CAG list is being discussed.

The AMF may trigger the AN release procedure if the current serving cell of the UE is not included in the updated list of allowed CAGs. This procedure can be applied to the UE configuration update procedure as follows:

"The AMF may receive a Nudm_SDM_ Notification to initiate a UE Configuration Update procedure and the CAG information may have changed such that the CAG identifier is removed from the list of allowed CAGs or the UE is only allowed to access CAG cells. In this case, the AMF may trigger the AN Release procedure for UEs not receiving emergency services to disconnect the NAS signaling."

A validity condition to each entry is added in the list of allowed CAGs, which can be described as follows:
"The AMF may update the list of allowed CAGs in the mobility restriction to NG-RAN if the validity condition of an item in the list of allowed CAGs changes between valid and invalid."

In other words, according to the prior art, whenever the validity condition changes and the UE's current serving cell is not in the list of allowed CAGs, the AMF shall trigger the AN release procedure. The UE may receive home network services while receiving localized services. Therefore, if the UE has an ongoing service (e.g., voice call), the service may be interrupted by the network, affecting the user experience.

There is also the issue that UDM operation is not clear when AMF does not support CAGs with validity conditions, such as in the case of roaming.

As explained below, the AMF may not trigger the AN release procedure when the AMF updates the list of allowed CAGs to NG-RAN.

The UDM operation when AMF does not support CAGs with validity conditions can be described.

According to the prior art, UE service may be interrupted whenever the CAG validity condition changes. Based on the following discussion, these issues can be addressed.

In addition to the previously described <Network and cell (re-)selection, and access control>, the following may apply.
- During the transition from the RRC inactive state to the RRC connected state, the following operations may be performed:
- The UE may initiate the RRC Resume procedure for the state transition from RRC_INACTIVE to RRC_CONNECTED in the CAG cell. In this case, the NG-RAN may reject the UE's RRC Resume request if none of the supported CAG identifiers in the CAG cell are included in the UE's Allowed CAG list according to the mobility restrictions received from the AMF or if there is no Allowed CAG list received from the AMF.
- The UE may initiate an RRC resume procedure for state transition from RRC_INACTIVE to RRC_CONNECTED in a non-CAG cell. In this case, the NG-RAN shall reject the UE's resume request if the UE is only allowed to access CAG cells according to the mobility restrictions received from the AMF.
- If the AMF determines that the validity conditions of the list of allowed CAGs have changed, the updated list of allowed CAGs shall not be provided to the NG-RAN. The following explanations may also apply:
- The AMF may update the mobility restrictions of the NG-RAN. The AMF can trigger the AN release procedure.
- If the UE does not support a CAG with validation information, the AMF may update the UE with a list of allowed CAGs.

NOTE: There may be cases where the AMF does not support CAGs with validity conditions, such as in the case of roaming. In this case, it is up to operator policy to determine whether the UDM provides the AMF with CAG information that meets the validity conditions without validity conditions and updates the CAG information whenever the conditions change.

For example, if a CAG list update is required due to a subscription change on a terminal, the AMF can perform an AN release. If a CAG list update is required due to a validity condition change without a subscription change, the AMF can keep the terminal in connected mode without performing an AN release.

NOTE: If a UE accesses the network for emergency services, the AMF conditions in clause 5.16.4.3 of TS 23.501 may apply.

In addition, various examples of the present disclosure may be applied in the following examples.

For the previously described <Modification of AN release condition due to update of Allowed CAG list>, the following may additionally apply.

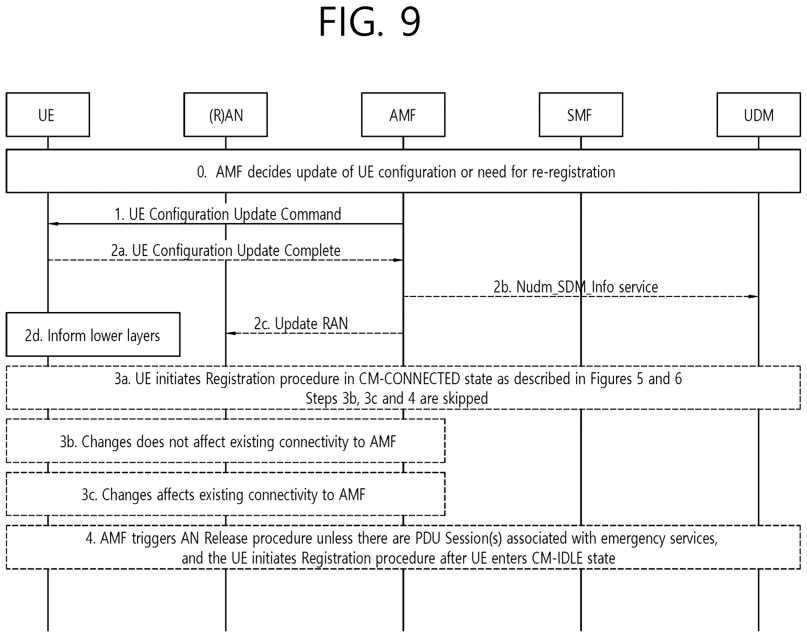

Referring to the example in Figure 9, an example procedure for UE configuration update for access and mobility management related parameters will be described.

This procedure can be initiated by the AMF when the AMF wants to update access and mobility management related parameters in the UE configuration.

The procedure may also be used to trigger the UE to perform the following example procedures based on network indications. The procedure may be, for example, a mobility registration update procedure to modify a NAS parameter that requires negotiation while in the CM-CONNECTED state (e.g. MICO mode), or to steer the UE towards the EPC as specified in clause 5.31.3 of TS 23.501, or a mobility registration update procedure for a change in the allowed NSSAI that requires re-registration after the UE enters the CM-IDLE state. If a registration procedure is required, the AMF shall provide the UE with an indication to initiate the registration procedure.

The UE configuration update shall be sent via the access type (e.g. 3GPP access or non-3GPP access) to which the UE configuration update applies, if applicable. If the AMF wishes to update a NAS parameter of the UE that requires UE authorization, the AMF may indicate to the UE whether the UE should authorize the command. The AMF shall not request an acknowledgment for NITZ commands. The AMF may request authorization for NSSAI information (e.g. allowed NSSAI), 5G-GUTI, TAI list and mobility restrictions, LADN information, MICO, operator defined access category definitions, PLMN assigned UE radio function ID and SMS subscriptions.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 9** **illustrates an example of a UE configuration update procedure according to one embodiment of the disclosure.**

The example in Figure 9 shows an example of UE configuration update procedure for access and mobility management related parameters.

0. The AMF may determine that UE configuration changes are required or that the UE needs to perform a registration procedure for various reasons. For example, the various reasons may include changes in UE mobility, NW policy, receiving subscriber data update notifications from the UDM, changing network slice configuration, need to assign the UE radio function ID assigned by the PLMN, need to change the enhanced coverage limitation information in the context of the UE. Here, a change in the network slice settings may include a change in the NSSRG information in the subscription information specified in clause 5.15.12 of TS 23.501 or a change in the NSAG information specified in clause 5.15.14 of TS 23.501. If the UE is in the CM-IDLE state, the AMF may wait until the UE enters the CM-CONNECTED state or triggers a network triggered service request.

NOTE 1: It is up to the network implementation whether the AMF can wait until the UE is in CM-CONNECTED state or trigger the Network Triggered Service Request.

NOTE 2: The AMF can check whether Network Slice configuration needs to be updated by using the Nnssf_NSSelection _Get service operation. In such case the AMF may compare the stored information with the output from the NSSF to decide whether an update of the UE is required.

When the coverage area restrictions for a UE are updated, the AMF may include a list of mobility restrictions in the N2 message that conveys the UE configuration update command to the UE.
1. the AMF may send a UE configuration update command message to the UE. The AMF may transmit to the UE a UE configuration update command message including one or more UE parameters. The one or more UE parameters may include the following: Configuration Update Indication, 5G-GUTI, TAI List, Allowed NSSAI, Mapping Of Allowed NSSAI, Configured NSSAI for the Serving PLMN, Mapping Of Configured NSSAI, [NSSRG Information], rejected S-NSSAIs, NITZ, Mobility Restrictions, LADN Information, MICO, Operator-defined access category definitions, SMS Subscribed Indication, [PLMN-assigned UE Radio Capability ID], [PLMN-assigned UE Radio Capability ID deletion indication], ["List of PLMN(s) to be used in Disaster Condition"], [Disaster Roaming wait range information], [Disaster Return wait range information], [MPS priority], [MCX priority], [UAS services Indication]. Optionally, the AMF may update the rejected S-NSSAI in the Update UE settings command.

If the AMF wishes to update these NAS parameters without performing the UE registration procedure, the AMF may include one or more of the following in the UE configuration update command message: 5G-GUTI, TAI list, allowed NSSAIs, mapping of allowed NSSAIs, configured NSSAIs for the serving PLMN, mapping of configured NSSAIs, rejected S-NSSAIs, network identification and time zone (NITZ), mobility restriction parameters, LADN information, operator defined access category definition, PLMN assigned UE radio function ID, or SMS subscription indication.

The AMF may also include a configuration update indication parameter in the UE configuration update command to indicate whether the setting has been updated:
- Network Slicing Subscription Change has occurred;
- the UE shall acknowledge the command; and
- whether a Registration procedure is requested.
- Network Slicing Subscription Change has occurred;
- the UE shall acknowledge the command; and
- whether a Registration procedure is requested.

When the AMF indicates a network slicing subscription change, the UE locally deletes all network slicing configurations for all PLMNs and, if possible, the UE updates the configuration for the current PLMN based on the information received. If the AMF indicates a network slicing subscription change, the UE receives an acknowledge request in step 2.

The AMF may also include a new Configured NSSAI for the serving PLMN in the UE Configuration Update Command message. In this case, the AMF shall also include the new Allowed NSSAI with the mapping of the associated Allowed NSSAI, if available. The AMF shall include the new Allowed NSSAI unless the AMF is unable to determine the new Allowed NSSAI after the subscribed S-NSSAI has been updated, in which case the AMF shall not include any Allowed NSSAI in the UE Configuration Update Command message.

The UE may also indicate that it supports subscription-based restrictions on the network slice co-registration capability in the UE 5GMM core network function. In this case, the AMF may include the NSSRG information as defined in clause 5.15.12 of TS 23.501 in the UE configuration update command message, if available. If the UE has not indicated support for subscription-based restriction of the network slice co-registration feature, and the subscription information for the UE includes NSSRG information, the AMF may provide the UE with a configured NSSAI. In this case, the configured NSSAI may include an S-NSSAI according to clause 5.15.12 of TS 23.501.

The UE may indicate that it supports NSAG functionality in the 5GMM core network capability. In this case, the AMF may include NSAG information as defined in clause 5.15.14 of TS 23.501 in the UE configuration update command message, if available. The AMF may include NSAG information when providing a new configuration NSSAI including S-NSSAIs with associated NSAG values or when the NSAG information for some S-NSSAIs in the configuration NSSAI changes. Once the NSAG information is provided to the UE, the AMF may request the UE to acknowledge the UE Configuration Command message.

The UE and the AMF support RACS as defined in clause 5.4.4.1a of TS 23.501, and the AMF may already have a UE radio capability other than the NB-IoT radio capability for the UE and may configure a UE Radio Capability ID for the UE. In this case, the AMF may provide the UE with a UE Radio Capability ID for the UE radio capability that is returned to the AMF by the UCMF in the Nucmf_assign service operation for this UE.

If the UE needs to be redirected to a dedicated frequency band for S-NSSAI, the AMF may determine the target NSSAI either on its own or by interacting with the NSSF using Nnssf_NSSelection_Get including the rejected S-NSSAIs and allowed NSSAIs for the RA. The AMF may determine the RFSP index associated with the target NSSAI by interacting with the PCF using an Npcf_AMPolicyControl_Update that includes the target NSSAI to retrieve the corresponding RFSP index, or, if the PCF is not deployed, based on local configuration. The target NSSAI and the RFSP index associated with the target NSSAI are provided to the NG-RAN within the N2 message carrying the UE Configuration Update Command message.

If the UE and the AMF support disaster roaming services, the AMF may include in the UE Configuration Command message the "list of PLMNs to be used in disaster conditions", disaster roaming standby coverage information and disaster return standby coverage information as specified in TS 23.501. When the disaster conditions no longer apply, the serving AMF providing the disaster roaming service may notify the UE as specified in clause 5.40.5 of TS 23.501.

If the AMF receives a subscriber data update notification from the UDM that includes MPS priority or MCX priority, the AMF may include the MPS priority or MCX priority, respectively, in the UE configuration update command as specified in clause 5.22.2 of TS 23.501.

If the UAS service is enabled or disabled (for example, because the public subscription is part of the UE subscription data retrieved in the UDM change), the AMF may include an indication in the UE configuration update command that the UAS service is enabled or disabled.

If the UE indicates that it supports DNN and LADN per S-NSSAI in the UE MM core network functionality during the registration procedure specified in clause 4.2.2.2.2, the AMF may include DNN and LADN per S-NSSAI information.

2a. The UE may send a UE configuration update complete message to the AMF.

If the UE configuration update indication requires acknowledgment of the UE configuration update command, the UE shall send a UE configuration update complete message to the AMF. The AMF shall request acknowledgment of all UE Configuration Updates except when only NITZ is provided. If no registration procedure is required, steps 3a, 3b, 3c and 4 shall be omitted. If the Configuration Update indication is included in the UE Configuration Update command message and the registration procedure is required based on other NAS parameters included in the UE Configuration Update command, the UE shall perform steps 3a or 3b or 3c+4 as applicable.

If the UE radio function ID assigned by the PLMN is included in step 1, the AMF may store the UE radio function ID in the UE context when it receives the UE configuration update complete message.

If in step 1 the UE receives the delete assigned UE radio function ID indication from the PLMN, the UE may delete the assigned UE radio function ID from the PLMN for that PLMN. If the UE configuration update is used for this purpose only, the following steps are omitted.

2b. [Conditional] The AMF shall also use the Nudm_SDM_Info service operation to provide the UDM with confirmation that the UE has received and acted upon the CAG information (if the CAG information has been updated) or the network slicing subscription change indication (if indicated in step 1) as part of the mobility restriction.

2c. The AMF can update the RAN.

[Conditional] If the AMF has reconfigured the 5G-GUTI via 3GPP access, the AMF may notify the NG-RAN of the new UE Identity Index value (derived from the new 5G-GUTI) when it receives the acknowledgement from the UE in step 2a.

[Conditional] It is possible that the UE is registered in the same PLMN via 3GPP access and non-3GPP access, the AMF reconfigures the 5G-GUTI via non-3GPP access, and the UE is CM-CONNECTED via 3GPP access. In this case, the AMF may inform the NG-RAN of the new UE Identity Index value (derived from the new 5G-GUTI) when it receives the authorization from the UE in step 2a.

[Conditional] If the AMF has configured the UE with the UE radio function ID assigned by the PLMN, the AMF informs the NG-RAN of the UE radio function ID when it receives the acknowledgment from the UE in step 2a.

[Conditional] The mobility restrictions for the UE are updated, but the mobility restrictions may not be provided in the N2 message carrying the UE configuration update command. In this case, the AMF may provide the updated mobility restrictions to the NG-RAN unless the UE is released by the AMF in step 2c. The specific operation is described below.

Based on the receipt of the Nudm_SDM_ Notification by the AMF, the AMF may initiate a UE Configuration Update procedure and the CAG identifier may be removed from the list of allowed CAGs or the CAG information may be changed so that the UE is only allowed to access CAG cells. In this case, the AMF may trigger the AN Release procedure for UEs not receiving emergency services as defined in TS 23.501 to release the NAS signaling conncetion.

If the AMF updates the list of allowed CAGs to the NG-RAN due to a change in validity conditions, the following operation may occur. For example, the AMF may forward the updated list of allowed CAGs to the NG-RAN without triggering the AN release procedure. In another example, the AMF may trigger the AN release procedure for UEs that are not receiving emergency services to disconnect from NAS signaling.

NOTE: If the validity condition is applied just before the NG-RAN enforces the allowed CAG list, the AMF may trigger the AN release procedure without sending the updated allowed CAG list to the NG-RAN.

It is possible that a UE supports CAGs, but does not support CAGs that include validity conditions. In this case, if an entry in the allowed CAG list is associated with a validity condition in the subscription data and the validity condition evaluates to true, the CAG identifier of the corresponding entry in the subscription data may be provided to the UE without the validity condition. And if the evaluation of the validity condition changes to false, the CAG identifier may be removed by the AMF from the entry in the allowed CAG list.

For example, the AMF may update the list of allowed CAGs in a cellular restriction if the evaluation of the validity condition of an entry in the list of allowed CAGs has changed between true and false. In this case, if the evaluation of the validity condition changes from true to false, the AMF may update the list of allowed CAGs, provided that the AMF has not disconnected the NAS signaling to the UE, based on the operator's policy.

A change in validity conditions may require the AMF to update the list of allowed CAGs to the NG-RAN. In this case, for UEs not receiving emergency services, the AMF may update the allowed CAG list to the NG-RAN and maintain the NAS signaling association, or it may not update the allowed CAG list to the NG-RAN and trigger the AN release procedure to release the NAS signaling association.

NOTE: If the validity condition needs to be applied just before NG-RAN enforces the list of allowed CAGs, the AMF may trigger the AN release without sending the updated list of allowed CAGs to NG-RAN.

The validity condition may change, causing the AMF to update the Allowed CAG list to the NG-RAN. In this case, the AMF may start a timer and not perform AN release for the terminal until the timer expires, i.e., it may keep the terminal connected. Then, when the timer expires, the AMF can perform an AN release for the terminal. The timer may be stopped if the terminal becomes idle or if a handover occurs. To know when a handover occurs without an update of the terminal's downlink N3 tunnel information, the AMF may use the NG-RAN Location reporting procedures for NG-RAN. Accordingly, the AMF may require the NG-RAN to report to the AMF whether the current serving cell has changed.

2d. [Optional] In step 2a, a new 5G-GUTI is established for the UE over non-3GPP access and the UE may be registered in the same PLMN over 3GPP access and non-3GPP access. In this case, the UE may forward the new 5G-GUTI to the lower layers of the 3GPP access.

If the UE has configured a new 5G-GUTI in step 2a over 3GPP access, the UE may forward the new 5G-GUTI to the lower layers of the 3GPP access.

3a. [Conditional] If only NAS parameters that can be updated without transitioning from CM-IDLE are included (e.g. MICO mode, enhanced coverage limitation information), the UE may start the registration procedure immediately after acknowledgement to renegotiate the updated NAS parameters with the network. In this case, steps 3b, 3c and 4 may be omitted.

3b. [Conditional] The new allowed NSSAI and/or mapping of the new allowed NSSAI and/or new configured NSSAI provided by the AMF to the UE in step 1 does not affect the existing connection to the AMF. In this case, the AMF does not need to disconnect the NAS signaling to the UE after receiving authorization in step 2, and immediate registration is not required. The UE may immediately start by using the new allowed NSSAI and/or the new allowed NSSAI mapping. If one or more PDU sessions use an S-NSSAI that is not included in the new allowed NSSAI, the AMF shall indicate the corresponding PDU session ID to the SMFs and each SMF may release the PDU sessions. Until the UE performs the registration procedure and includes the requested NSSAI based on the new configured NSSAI, the UE shall not be able to associate with an S-NSSAI that is included in the new established NSSAI for the serving PLMN but not in the new allowed NSSAI. Steps 3c and 4 may be omitted.

The AMF may provide an indication that the registration procedure is required even if the UE configuration update command in step 1 does not affect existing connections to the network slice, depending on the policy, in which case only step 3c may be omitted.

3c. [Conditional] The new allowed NSSAI and/or the mapping of the new allowed NSSAI to the new allowed NSSAI and/or the new established NSSAI provided by the AMF to the UE in step 1 may affect the existing connection to the AMF. In this case, the AMF may provide an indication that the UE needs to initiate the registration process.

4. [Conditional] After receiving the authorization in step 2, the AMF may trigger the AN release procedure to release the NAS signaling association for the UE if there are no established PDU sessions associated with regulatory prioritized services. If there is at least one established PDU session associated with regulatory prioritized services, the AMF may notify the SMF to release PDU sessions associated with non-regulatory prioritized services for this UE.

The AMF shall reject all NAS messages from UEs carrying PDU session establishment requests for non-emergency PDU sessions until the required registration procedure has been successfully completed by the UE.

After the UE enters the CM-IDLE state, the UE may initiate the registration procedure with registration type mobility registration update, and the UE may not include the 5G-S-TMSI or GUAMI in the access layer signaling, but may include the requested NSSAI in the access layer signaling under the conditions specified in clause 5.15.9 of TS 23.501. If a PDU session related to emergency services is established and the UE is instructed to perform the registration procedure, the UE may initiate the registration procedure only after the PDU session related to emergency services is released.

Note that the registration process by the UE may be triggered for other reasons, even if the UE receives the UE configuration update command without any indication that it is requested to perform re-registration.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

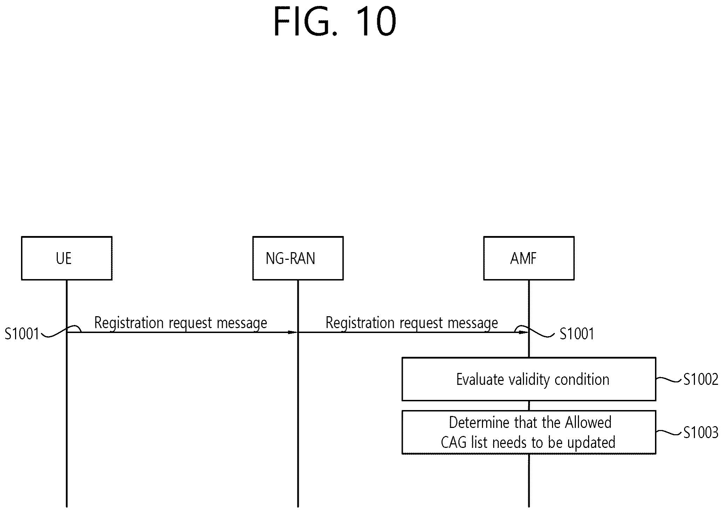

**FIG. 10** **illustrates an example of a procedure performed according to one embodiment of the present disclosure.**

It should be noted that the procedure shown in FIG. 10 is illustrative only, and the scope of the disclosure is not limited by the example in FIG. 10.

For example, for the example of FIG. 10, the operation described in the examples of FIGS. 1 through 9 may also be applied. For example, any operation, content, etc. described in the various examples of the disclosure may be applied, even if the operation, content, etc. is not directly described in the example of FIG. 10.

In step S1001, the UE may send a registration request message. The UE may send a registration request message to the AMF over the NG-RAN.

For example, the registration request message may include the MM Core Network Capability. The core network capability information may include information related to whether the UE supports CAG with validity information (CAG with validity information).

The AMF may send a registration acceptance message to the UE. The registration acceptance message may include a list of allowed CAGs. For example, the registration acceptance message may include mobility restriction information. The mobility restriction information may include CAG information. The CAG information may include a list of allowed CAGs. For example, if the UE supports CAG and the AMF needs to update the UE's CAG information, the AMF may include the CAG information in the mobility restrictions included in the registration acceptance message.

For example, the AMF may transmit a downlink NAS TRANSPORT message to the NG-NAN. For example, the AMF may initiate the procedure by sending a downlink NAS TRANSPORT message to the NG-RAN node. If the logical NG association associated with the UE has not been established, the AMF shall assign a unique AMF UE NGAP ID for the UE to use and include it in the DOWNLINK NAS TRANSPORT message, and the NG-RAN node may receive the AMF UE NGAP ID IE in the downlink NAS TRANSPORT message to establish the logical NG association associated with the UE.

Note that if the mobility restriction list IE is included in the downlink NAS transport message, the NG-RAN node may overwrite previously stored mobility restriction information in the context of the UE. The NG-RAN node may use the information included in the mobility restriction list IE as shown in the following example:
- The NG-RAN node determines the target of subsequent mobility operations that provide information about the mobility operation target for the UE;
- Select the appropriate SCG for the Dual connectivity operation;
- Assign the appropriate RNA to the UE when moving the UE to the RRC_INACTIVE state.

In step S1002, the AMF may evaluate the validity conditions of the entries included in the list of allowed CAGs. For example, if the NG-RAN and/or UE supports CAGs based on validity information, the NG-RAN and/or UE may also evaluate the validity conditions.

In step S1003, the AMF may determine whether it is necessary to update the list of allowed CAGs.

For example, based on a change in the validity condition of one or more entries in the list of allowed CAGs between true and false, the AMF may determine that it is necessary to update the list of allowed CAGs for NG-RAN.

For example, based on the need for the AMF to update said list of allowed CAGs, the AMF may send a downlink NAS transport message including the updated list of allowed CAGs to said NG-RAN, while maintaining NAS signaling.

In another example, the AMF may trigger the AN release procedure to disconnect NAS signaling based on the need to update the list of allowed CAGs.

If the UE does not support a CAG based on the validation information and the validation condition is evaluated as true, based on at least one entry in said list of allowed CAGs being associated with said validation information, the AMF may send the CAG identifier of said at least one entry to the UE without said validation information. If the validity condition changes to false, the AMF may delete said CAG identifier of said at least one entry.

If the AMF updates the list of allowed CAGs to the NG-RAN due to a change in validity conditions, the following operation may occur. For example, the AMF may forward the updated list of allowed CAGs to the NG-RAN without triggering the AN release procedure. In another example, the AMF may trigger the AN release procedure for UEs not receiving emergency services to disassociate from NAS signaling. The AMF may disassociate the NAS signaling by triggering the AN de-anonymization procedure for UEs that do not receive emergency services.

Note that if the validity condition is applied just before the NG-RAN enforces the allowed CAG list, the AMF may trigger the AN release procedure without sending the updated allowed CAG list to the NG-RAN.

It is possible that a UE supports CAGs, but does not support CAGs that includes validity conditions. In this case, if an entry in the allowed CAG list is associated with a validation condition in the subscription data and the validation condition evaluates to true, the CAG identifier of that entry in the subscription data may be provided to the UE without the validation condition. The CAG identifier may be removed from the entry in the allowed CAG list by the AMF if the evaluation of the validity condition changes to false. The CAG identifier may be removed if the evaluation of the validity condition changes to false.

For example, the AMF may update the list of allowed CAGs in a mobility restriction if the evaluation of the validity condition of an entry in the list of allowed CAGs has changed between true and false. In this case, if the evaluation of the validity condition changes from true to false, the AMF may update the list of allowed CAGs, provided that the AMF has not disconnected the NAS signaling to the UE, based on the operator's policy.

A change in validity conditions may require the AMF to update the list of allowed CAGs to the NG-RAN. In this case, for UEs not receiving emergency services, the AMF may update the allowed CAG list to the NG-RAN and maintain the NAS signaling association, or the AMF may not update the allowed CAG list to the NG-RAN and trigger the AN release procedure to release the NAS signaling association.

Note that if the validity condition needs to be applied just before the NG-RAN enforces the allowed CAG list, the AMF can trigger the AN release without sending the updated allowed CAG list to the NG-RAN.

If the UE supports CAG based on validity information, the following example operation may be perfored. If the UE is connected to a CAG cell and the corresponding entry in the list of allowed CAGs set in the UE is associated with validity information, the UE may trigger a cell reselection and/or network selection procedure if the evaluation of the validity condition changes.

To use CAG, for a UE supporting CAG as indicated as part of the UE 5GMM core network capability, the following may be configured according to the mobility restrictions. For example, for a UE, as part of the mobility limitation, it may be preset or (re)set with the following CAG information included in the subscription
- list of allowed CAGs, i.e., the list of CAG identifiers that the UE can access; and
- Each entry in the list of allowed CAGs can be associated with time validity information.

The above CAG information may be provided by the HPLMN on a per PLMN basis. In a PLMN, the UE may only consider the CAG information provided for that PLMN. Entries in the list of allowed CAGs with validity conditions may be provided to the UE only if the UE indicates that it supports the CAG with validity information.

Various drawings according to the present disclosure be applied separately or in combination with the other drawings.

According to various embodiments of the present disclosure, the NG-RAN may determine whether a particular CAG is valid at a particular time or location to determine whether to continue serving that terminal. For example, the NG-RAN may inform the AMF of the NG-RAN's capability to check the validity condition for a CAG during the NG Setup process. For example, the AMF may forward the Allowed CAG list information, including the validity condition, to the NG-RAN based on the capability received from the NG-RAN. For example, based on the validity condition, the NG-RAN may validate the CAG to continue serving the terminal, handover to another NG-RAN, or disconnect the terminal.

For example, a terminal may not have the capability to check the validity condition for a CAG. In this case, the AMF may still check the validity condition for each CAG, set the Allowed CAG list accordingly, and transmit it to the terminal. It is also possible that some CAGs in the Allowed CAG list for a terminal may be changed to invalid due to validity conditions. In this case, the AMF may also transmit the updated Allowed CAG list to the NG-RAN without triggering an AN release and maintaining the current NG connection.

The present disclosure can have a variety of effects.

For example, according to various examples of the present disclosure, a validity condition may cause a particular CAG to change from valid to invalid. In such a case, the NG-RAN and the AMF may determine whether the terminal can continue to be served on the cell accessed by the terminal without immediately disconnecting the terminal. In addition, even if the cell cannot continue to serve the terminal, NG-RAN and/or AMF may handover the terminal to another nearby cell so that the NG-RAN and the AMF can continue to provide services to the terminal.

For example, according to various examples of the present disclosure, a network in which the validity of a particular CAG is changed by a validity condition may provide services to a terminal that does not support the CAG including the validity condition. In addition, even if some CAGs in the Allowed CAG list for a terminal are no longer valid due to a validity condition, the AMF may not trigger an AN release. As a result, the network can continue to provide services to the terminal.

The effects that may be obtained from the specific examples of the present disclosure are not limited to those listed above. For example, there may be a variety of technical effects that a person having ordinary skill in the related art may understand or infer from the present disclosure. Accordingly, the specific effects of the present disclosure are not limited to those expressly set forth herein, but may include a variety of effects that may be understood or inferred from the technical features of the present disclosure.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204. And, the instructions recorded in the storage medium may be executed by one or more processors 102 or 202 to perform the operation of the terminal (e.g., UE) described in the present disclosure of the present specification.

For reference, the operation of a network node (e.g., AMF, SMF, UPF, PCF, , NEF, UDM, DN, etc.) or base station (e.g., NG-RAN, gNB, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication, the method performed by an access and mobility management function (AMF) and comprising:
receiving a registration request message including core network capability information from a user equipment (UE),
wherein the core network capability information includes information related to whether the UE supports a closed access group (CAG) with validity information;
evaluating a validity condition of an entry included in a allowed CAG list; and
based on that a validity condition of a first entry included in the of allowed CAG list is changed between true and false, determining that the AMF needs to update the allowed CAG list for a New Generation (NG)-Random Access Node (RAN).

2. The method of claim 1, further comprising:
based on that the AMF needs to update the allowed CAG list, transmitting a downlink NAS transport message including the updated allowed CAG list to the NG-RAN, while the AMF keeps the NAS signaling connection.

3. The method of claim 1, further comprising:
based on that the AMF needs to update the allowed CAG list, triggering Access Network (AN) procedure, to release Non Access Stratum (NAS) signalling connection.

4. The method of any one of claims 1 to 3, further comprising:
based on that the UE does not support a CAG with the validity information, and one or more entries of the allowed CAG list are associated with the validity information, when the validity condition is evaluated as true, transmitting a CAG identifier of the one or more entries to the UE.

5. The method of claim 4, further comprising:
removing the CAG identifier of the one or more entries, when the validity condition is changed to false.

6. An Access and mobility Management Function (AMF) for performing communication, the AMF comprising:
one or more transceivers;
one or more processors; and
one or more memories storing instructions and operably coupled to the one or more processors,
wherein based on the instructions being executed by the one or more processors, the operations being performed include the method of any one of claims 1 to 5.

7. A method for performing communication, the method performed by a User Equipment (UE) and comprising:
transmitting a registration request message including core network capability information to an Access and mobility Management Function (AMF),
wherein the core network capability information includes information related to whether the UE supports a closed access group (CAG) with validity information;
receiving registration accept message includes a allowed CAG list,
wherein information related to whether the UE supports the with the validity information, is used by the AMF, to transmit a CAG identifier of one or more entries included in the allowed CAG list based on a evaluation of a validity condition.

8. The method of claim 7, further comprising:
receiving the CAG identifier of one or more entries from the AMF.

9. The method of claim 7 or claim 8,
based on that the UE does not support a CAG with the validity information, and the one or more entries of the allowed CAG list are associated with the validity information, when the validity condition is evaluated as true, the CAG identifier of the one or more entries is received.

10. The method of claim 9,
wherein the CAG identifier of the one or more entries is removed, when the validity condition is changed to false.

11. A User Equipment (UE) for performing communication, the UE comprising:
one or more transceivers;
one or more processors; and
one or more memories storing instructions and operably coupled to the one or more processors,
wherein based on the instructions being executed by the one or more processors, the operations being performed include the method of any one of claims 7 to 10.

12. An apparatus in mobile communication, the apparatus comprising:
one or more transceivers;
one or more processors; and
one or more memories storing instructions and operably coupled to the one or more processors,
wherein based on the instructions being executed by the one or more processors, the operations being performed include the method of any one of claims 7 to 10.

13. A non-transitory computer readable medium (CRM) storing instructions,
wherein based on the instructions are executed by one or more processors, cause the one or more processors to execute the operations including the method of any one of claims 7 to 10.
